(19) Europäisches Patentamt
European Patent Office
Office européen des brevets

(11) EP 1 628 477 A1

(12) EUROPEAN PATENT APPLICATION
published in accordance with Art. 158(3) EPC

(43) Date of publication:
22.02.2006 Bulletin 2006/08

(51) Int Cl.:
*H04N 5/93* (1980.01)   *G11B 27/34* (1968.09)

(21) Application number: 04728900.4

(22) Date of filing: 22.04.2004

(86) International application number:
PCT/JP2004/005778

(87) International publication number:
WO 2004/095837 (04.11.2004 Gazette 2004/45)

(84) Designated Contracting States:
DE FR GB

(30) Priority: 22.04.2003 US 420426

(71) Applicant: MATSUSHITA ELECTRIC INDUSTRIAL
CO., LTD.
Kadoma-shi, Osaka 571-8501 (JP)

(72) Inventors:
• HAMASAKA, Hiroshi
Osaka 573-0075 (JP)

• KOZUKA, Masayuki
Osaka 572-0024 (JP)
• MINAMI, Masataka
Mountain View, CA 940401 (US)

(74) Representative: Grünecker, Kinkeldey,
Stockmair & Schwanhäusser
Anwaltssozietät
Maximilianstrasse 58
D-80538 München (DE)

(54) **REPRODUCTION DEVICE AND PROGRAM**

(57)    An optical disc stores an AVClip including a video stream and a graphics stream showing a subtitle. A resolution for the AVClip is obtained from Clip information. After this, a ratio is calculated between the obtained resolution and a resolution of a display apparatus that can be connected to a reproducing apparatus. A subtitle content that is selected according to the calculated resolution ratio is reproduced along with the video stream.

SUBTITLE CONTENT FROM SERVER APPARATUS   FIG.15

**Description**

TECHNICAL FIELD

The present invention relates to a reproducing apparatus that reproduces a content including video data and auxiliary data. The present invention particularly relates to improvement of display of auxiliary data in synchronization with video data.

BACKGROUND ART

Contents provided for users in a state of being stored in large-capacity discs such as BD-ROMs are classified into two types depending on a resolution. One of the two types is high-quality contents having a resolution of 1920 × 1080, and the other is standard-quality contents having a resolution of 720 × 480.

The contents having a high resolution are suitable to be displayed at a High Definition Television (HDTV) display apparatus. On the other hand, the contents having a standard resolution are suitable to be displayed at a Standard Definition Television (SDTV) display apparatus. If a content having a resolution of 1920 × 1080 is displayed at an HDTV display apparatus, pictures and subtitles constituting the content can be displayed at their original resolution. In this way, users can enjoy movie contents at home with as high image quality as at movie theaters.

According to the prior art, when producing a content, video data and auxiliary data compatible with each of SDTV and HDTV need to be manufactured. However, this is a time-consuming process. When auxiliary data indicates subtitles, a digital stream including a video stream and subtitle graphics compatible with HDTV, and a digital stream including a video stream and subtitle graphics compatible with SDTV need to be produced and stored onto a storage medium. In addition, subtitles need to be prepared in many different languages, taking into account that movie contents will be distributed in various countries and regions. As mentioned above, an enormous number of processes are required to make subtitle graphics for each of SDTV and HDTV in many different languages, and to multiplex the subtitle graphics with a video stream. Therefore, there are some cases where subtitles in minor languages are made compatible only with one of SDTV and HDTV. However, if a digital stream including video data compatible with HDTV and subtitle graphics compatible only with SDTV is displayed at an HDTV display apparatus, subtitles can not be displayed at an original resolution of the HDTV display apparatus. From the aspect of cost reduction, it may be unavoidable to ignore the need of users speaking minor languages for subtitles compatible with HDTV. However, this is not preferable for movie companies in developing their business in the global market.

DISCLOSURE OF THE INVENTION

An objective of the present invention is to provide a reproducing apparatus which can achieve display of a subtitle at a resolution of both of HDTV and SDTV, even when subtitle graphics is made compatible with only one of HDTV and SDTV.

The objective is achieved by [Claim 1]. The second display unit causes the display apparatus to display the subtitle data obtained from the server apparatus, when the resolution ratio between the display apparatus and the content is not 1:1. In this way, even when a manufacturer of digital streams who performs authoring omits production of subtitle graphics, the reproducing apparatus can achieve display of subtitles as long as the reproducing apparatus can receive the subtitle data from the server apparatus.

In addition, even if production of subtitle data in minor languages can not be completed before shipment of the content, the present invention can provide subtitles in minor languages with users by providing the subtitle data afterwards. In this way, users residing in various areas in the world are all given a chance to enjoy subtitles compatible with HDTV. This can contribute to expansion of the market for distributing the content.

According to the above construction, the resolution ratio between the display apparatus and the content is taken into consideration when subtitles are displayed. Hence, subtitles can be optimally displayed in accordance with a change in a combination of the display apparatus and the content.

The reproducing apparatus receives the auxiliary data from the server apparatus. However, this technical idea is optional, and not essential to realize the reproducing apparatus. This is because the auxiliary data may be supplied by a source other than the recording medium storing the video data. If such is the case, the above objective can be achieved without receiving the auxiliary data from the server apparatus.

BRIEF DESCRIPTION OF THE DRAWINGS

Fig. 1 illustrates how a reproducing apparatus is used.
Fig. 2 illustrates a construction of a BD-ROM.
Fig. 3 is a schematic view illustrating how an AVClip is constructed.
Fig. 4A illustrates a construction of a presentation graphics stream.
Fig. 4B illustrates an internal structure of a PES packet.
Fig. 5 illustrates a logical structure constituted by functional segments of various types.
Fig. 6 illustrates a relation between a display position of a subtitle and an Epoch.
Fig. 7A illustrates a Graphics Object defined by an ODS.
Fig. 7B illustrates syntax of a PDS.
Fig. 8A illustrates syntax of a WDS.
Fig. 8B illustrates syntax of a PCS.
Fig. 9 illustrates, as an example, description to realize display of a subtitle.
Fig. 10 illustrates, as an example, how a PCS in a DS 1 is described.
Fig. 11 illustrates, as an example, how a PCS in a DS 2 is described.
Fig. 12 illustrates, as an example, how a PCS in a DS 3 is described.
Fig. 13 illustrates a movie content in comparison with a subtitle content.
Fig. 14 illustrates an example of a text subtitle content.
Fig. 15 illustrates an internal structure of a reproducing apparatus.
Fig. 16 illustrates an internal structure of a graphics decoder 9.
Fig. 17 is a flow chart illustrating a procedure of an operation performed by a Graphics Controller 37.
Fig. 18 is a flow chart illustrating a procedure of reproducing a movie content.
Fig. 19 is a f low chart illustrating a procedure of a display operation of a subtitle based on a text subtitle content.
Figs. 20A to 20C are used to illustrate an enlarging operation for outline fonts based on a resolution ratio.
Figs. 21A to 21C are used to illustrate a conversion operation for an HTML document performed by a control unit 29 in a second embodiment.
Figs. 22A to 22C are used to illustrate a procedure of adjusting a space between lines.

BEST MODE FOR CARRYING OUT THE INVENTION

(FIRST EMBODIMENT)

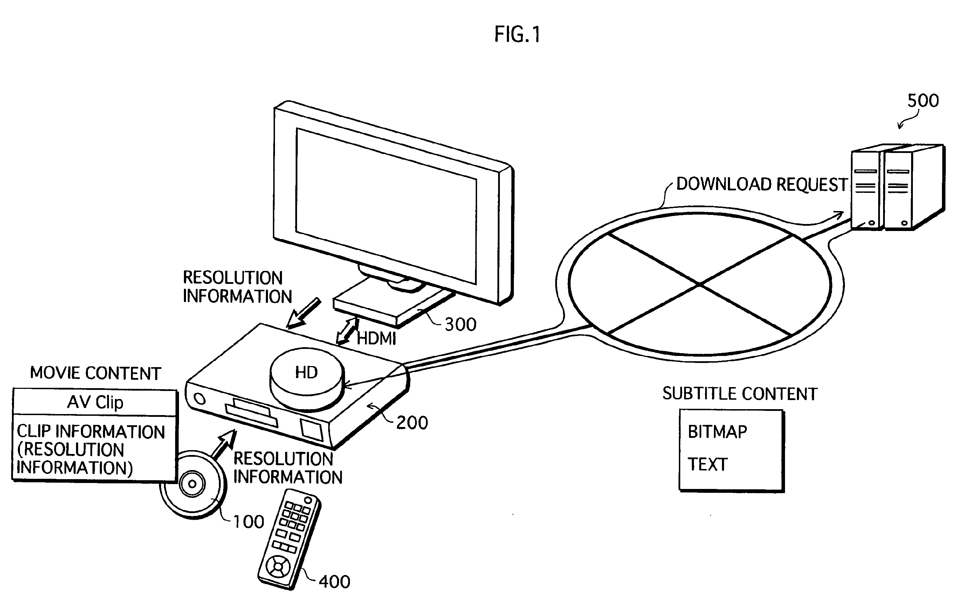

The following describes a reproducing apparatus relating to an embodiment of the present invention. In the following description, auxiliary data is assumed to be subtitle data. To start with, it is described how to use the reproducing apparatus relating to the embodiment, as one form of exploitation of the present invention. Fig. 1 illustrates how the reproducing apparatus relating to the embodiment is used. In Fig. 1, the reproducing apparatus relating to the embodiment is a reproducing apparatus 200 which, together with a display apparatus 300 and a remote controller 400, constitutes a home theater system.

A BD-ROM 100 has a role of providing a movie content with the home theater system. Such a movie content is constituted by an AVClip which is a digital stream, and Clip information which is management information for the AVClip. The AVClip is entity data including videos, audios and subtitles of the movie content. The subtitles of the movie content are bitmap subtitles, and constituted by graphics streams which are elementary streams. The Clip information includes resolution information indicating a resolution at which a frame picture included in video data is displayed. The resolution information normally indicates a numerical value of 1920 × 1080 (1080i), 720 × 480 (480i, 480p), 1440 × 1080, 1280 × 720, or 540 × 480. Here, the added "i" indicates the interlace mode, and the added "p" indicates the progressive mode.

The reproducing apparatus 200, to which the BD-ROM 100 is mounted, reproduces the movie content stored in the BD-ROM 100.

The display apparatus 300 is connected to the reproducing apparatus 200 by a High Definition Multimedia Interface (HDMI). Through the HDMI, the reproducing apparatus 200 can obtain resolution information from the display apparatus 300. This resolution information shows a resolution of the display apparatus 300. In this way, the reproducing apparatus 200 can judge whether the display apparatus 300 is compatible with a high or standard resolution.

The remote controller 400 is a portable device to receive a user's operation.

A server apparatus 500 stores subtitle contents in a variety of languages. In response to a request from the reproducing apparatus 200, the server apparatus 500 provides a subtitle content with the reproducing apparatus 200 by one of streaming and batch-downloading. While the subtitles in the movie content are bit-mapped, the subtitle contents include bitmap and text subtitles.

The following describes how the movie content is stored on the BD-ROM 100.

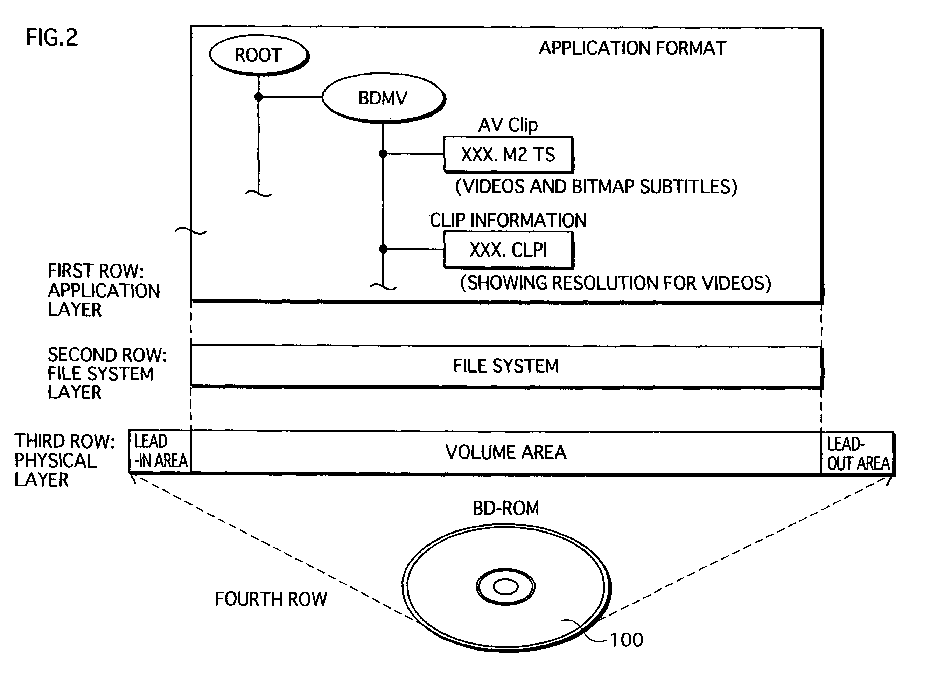

Fig. 2 illustrates a construction of the BD-ROM 100. In Fig. 2, the BD-ROM 100 is shown in a fourth row, and a track on the BD-ROM 100 is shown in a third row. The track is formed spirally from inside to outside on the BD-ROM 100, but is shown as a horizontal line in Fig. 2. The track includes a lead-in area, a volume area, and a lead-out area. The volume area has a layer model made up by a physical layer, a file system layer, and an application layer. A format of the application layer (an application format) in the BD-ROM 100 is illustrated based on a directory structure, in a first row in Fig. 2. As presented in Fig. 2, a ROOT directory, a BDMV directory, and files such as XXX.M2TS and XXX.CLPI are hierarchically arranged in this order from top in the BD-ROM 100. The file XXX.M2TS is the AVClip, and the file XXX.CLPI is the Clip information.

By forming the application format shown in Fig. 2, BD-ROM 100 relating to the embodiment of the present invention can be manufactured.

The following explains the AVClip, which constitutes the movie content together with the Clip information.

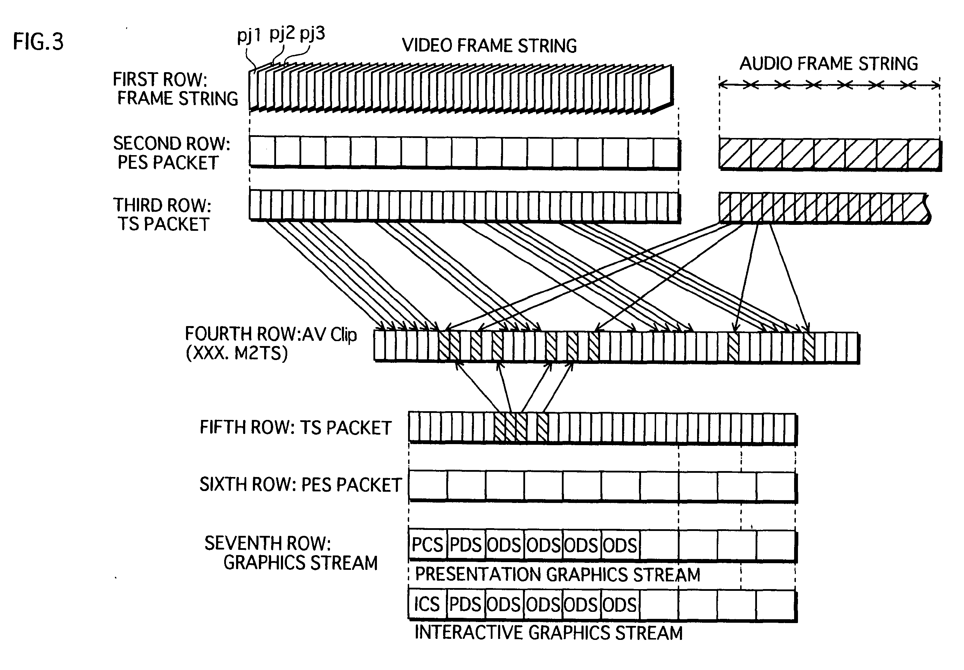

Fig. 3 is a schematic view illustrating how the AVClip is structured.

The AVClip (a fourth row) is formed in the following manner. A video stream made up by a plurality of video frames (pictures pj1, pj2 and pj3) and an audio stream made up by a plurality of audio frames (a first row) are converted into a PES packet string (a second row). The PES packet string is further converted into TS packets (a third row). Similarly, a presentation graphics stream for subtitles and an interactive graphics stream for interaction (a seventh row) are converted into a PES packet string (a sixth row). The PES packet string is further converted into TS packets (a fifth row). The TS packets (the third and fifth rows) are multiplexed together, to form the AVClip.

The above describes elementary streams that are multiplexed into the AVClip. Here, the interactive graphics stream is not directly related to the present invention, and is therefore not explained in the following.

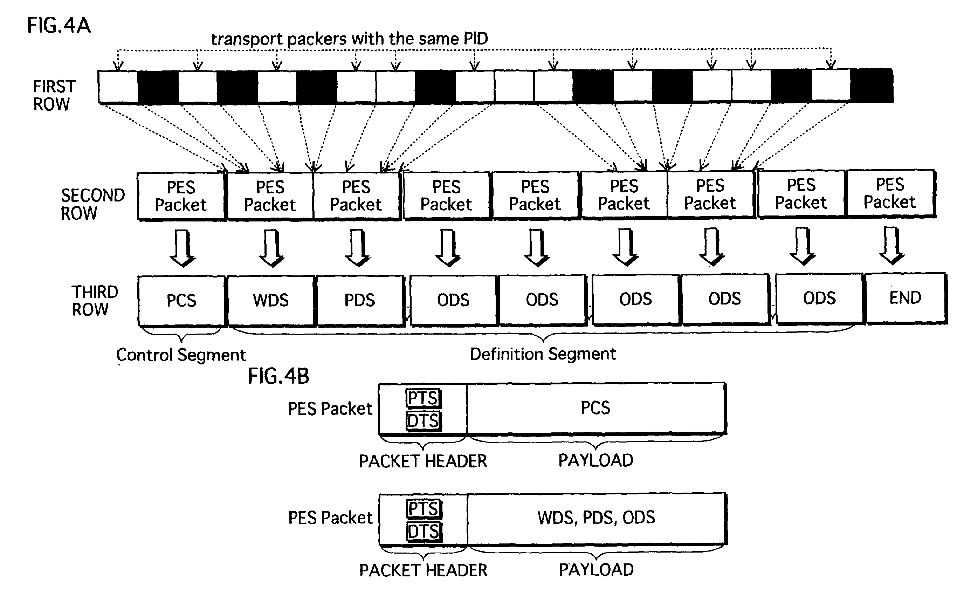

The following describes the presentation graphics stream. The presentation graphics stream is distinctively formed in such a manner that bitmap graphics is integrated with control information for display. Fig. 4A illustrates a construction of the presentation graphics stream. In a first row, a TS packet string to be multiplexed into the AVClip is illustrated. In a second row, the PES packet string forming the graphics stream is illustrated. The PES packet string in the second row is constituted by connecting payloads respectively extracted from TS packets which have a predetermined PID and are selected from the TS packets in the first row.

In a third row, the construction of the graphics stream is illustrated. The graphics stream includes functional segments such as a Presentation Composition Segment (PCS), a Window Define Segment (WDS), a Palette Definition Segment (PDS), an Object_Definition_Segment (ODS), and an END of Display Set Segment (END). Among these functional segments, the PCS is referred to as a screen composition segment, and the WDS, PDS, ODS and END are referred to as definition segments. Here, one PES packet corresponds to one or more functional segments.

Fig. 4B illustrates a PES packet that is obtained by converting one or more functional segments. As shown in Fig. 4B, a PES packet includes a packet header and a payload which is a substantial body of one or more functional segments. The packet header has a DTS and a PTS corresponding to the functional segments. In the following description, the DTS and the PTS stored in the packet header of the PES packet storing the functional segments are considered to be a DTS and a PTS of the functional segments.

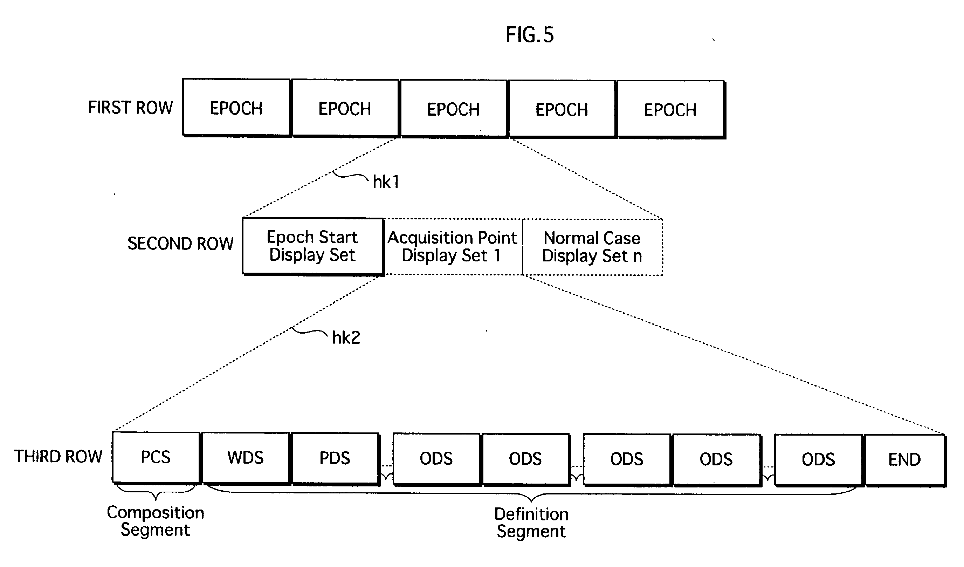

These various types of functional segments form a logical structure shown in Fig. 5. Fig. 5 illustrates the logical structure formed by the various types of functional segments. In Fig. 5, the functional segments are shown in a third row, Display Sets are shown in a second row, and Epochs are shown in a first row.

Each Display Set (abbreviated as DS) in the second row is a group of functional segments constituting graphics for one screen, out of a plurality of functional segments making up the graphics stream. In Fig. 5, dashed lines indicate an attributive relation between a DS and functional segments in the third row. As seen from Fig. 5, one DS is constituted by a series of functional segments, i.e. PCS-WDS-PDS-ODS-END. The reproducing apparatus 200 can form graphics for one screen by reading a series of functional segments forming one DS from the BD-ROM 100.

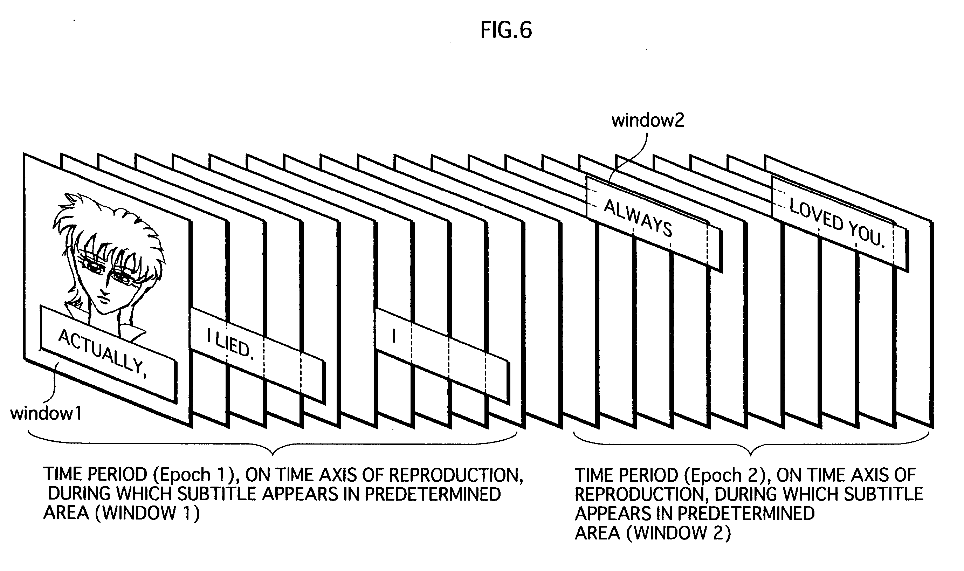

The Epochs shown in the first row each indicate a time period during which memory management is consecutive timewise along a timeline of the AVClip reproduction, and a data group assigned to the time period. The memory referred to here is assumed to be a Graphics Plane for storing graphics for one screen and an object buffer for storing decompressed graphics data. When memory management is consecutive timewise in one Epoch, the Graphics Plane and the object buffer are not flushed during the time period corresponding to one Epoch, and deleting and rendering of graphics are performed only within a rectangular area on the Graphics Plane during one Epoch. (Here, "to flush" means that the entire contents stored in the Graphics Plane and the object buffer are cleared.) The size and position of the rectangular area do not change through the time period corresponding to one Epoch. Fig. 6 illustrates a relation between a display position of a subtitle and an Epoch. As shown in Fig. 6, subtitles are displayed at different positions depending on pictures on the screen. To be specific, among five subtitles "ACTUALLY", "I LIED", "I", "ALWAYS", and "LOVED YOU", "ACTUALLY", "I LIED", and "I" are displayed at the bottom of the screen, but "ALWAYS" and "LOVED YOU" are displayed at the top of the screen. This intends to arrange each of the subtitles so as to be out of the way of pictures on the screen for easy viewing. If the subtitles are displayed at different positions in different time periods as described above, a time period during which subtitles appear at the bottom is an Epoch 1, and another time period during which subtitles appear at the top is an Epoch 2, in terms of the time axis of the reproduction of the AVClip. Here, each of the Epochs 1 and 2 has its own subtitle rendering area. During the Epoch 1, a subtitle rendering area (window 1) is positioned at the bottom of the screen. During the Epoch 2, on the other hand, a subtitle rendering area (window 2) is positioned at the top of the screen. Here, management of the buffer and the plane is consecutive timewise in each of the Epochs 1 and 2. This allows subtitles to be seamlessly displayed in each of the subtitle rendering areas. The above describes the Epochs. The following explains the Display Sets.

In Fig. 5, dashed lines hk 1 and hk 2 show an attributive relation between an Epoch and corresponding functional segments at the third row. As seen from Fig. 5, an Epoch in the first row is constituted by a series of Display Sets of Epoch start, Acquisition Point, and Normal Case. Here, Epoch start, Acquisition Point and Normal Case are typical Display Sets. The order of Acquisition Point and Normal Case shown in Fig. 5 serves only as an example, and may be reversed.

The Epoch Start is a DS that produces a display effect of "new display". The Epoch Start indicates a start of a new Epoch. Therefore, the Epoch Start includes all of the necessary functional segments to display a new composition of the screen. The Epoch Start Display Set is provided at a position which is a target of a skip operation of the AVClip, for example, a chapter in a film.

The Acquisition Point is a DS that produces a display effect of "refresh display". The Acquisition Point is identical in content used for rendering graphics, with the Epoch Start which is a preceding DS. The Acquisition Point is not located at the start of the Epoch, but includes all of the necessary functional segments to display the new composition of the screen. Therefore, it is possible to display the graphics without fail when a skip operation to the Acquisition Point is performed.

The Normal Case is a DS that produces a display effect of "display update". The Normal Case only includes elements different from the preceding composition of the screen. This is explained using the following example. When a DS v has the same subtitle as a preceding DS u but has a different screen composition from the DS u, the DS v is configured to include only a PCS, and to be a Normal Case DS. In this way, the DS v does not need to include the same ODS. This can contribute to reduction in data size in the BD-ROM 100. As mentioned above, since the Normal Case DS includes only a difference, the Normal Case DS alone can not compose the screen.

The following describes the Definition Segments (ODS, PDS and WDS).

The "Object_Definition_Segment" is a functional segment to define a Graphics Object which is bitmap graphics. The Graphics Object is described in the following. The AVClip stored in the BD-ROM 100 has an advantage of high-definition image quality. Accordingly, the Graphics Object is set to have a high resolution of 1920 × 1080 pixels. Because of such a high resolution, it is possible to vividly reproduce a character style which is used for subtitles when a movie is displayed at a theater, or a good hand-written character style. Each pixel has an index value (red color value (Cr value), a blue color value (Cb value), a brightness value (Y value), and a transparency value (T value)) having a bit length of 8 bits. Thus, any 256 colors chosen from a full color range of 16, 777, 216 colors can be set for the pixels. A subtitle shown by the Graphics Obj ect can be rendered by placing character strings on a transparent background.

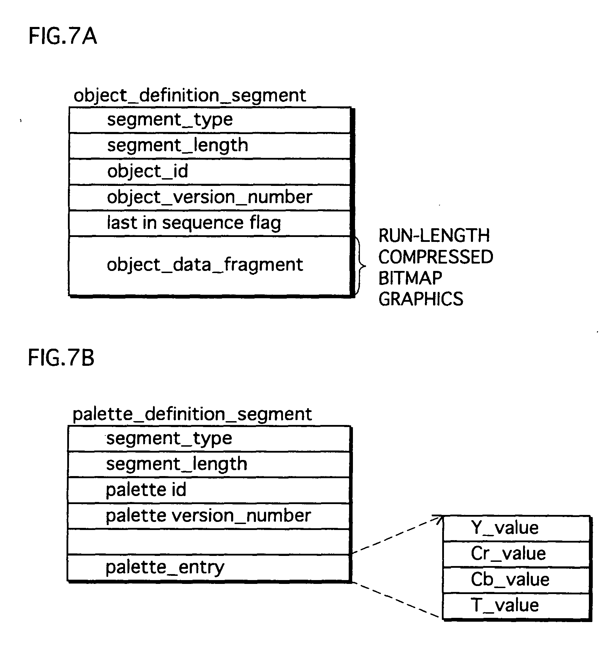

The ODS defines the Graphics Object using syntax shown in Fig. 7A. As shown in Fig. 7A, the ODS includes "segment_type" indicating that the segment is an ODS, "segment_length" indicating a data length of the ODS, "object_id" uniquely identifying the Graphics Obj ect corresponding to this ODS within the Epoch, "object_version_number" indicating a version of the ODS within the Epoch, "last_insequence_flag", and "object_data_fragment" which is a continuous string of bytes corresponding to part or all of the Graphics Object. The above describes the ODS.

The "Palette Definition Segment" (PDS) is information that defines a palette for color conversion. Syntax of the PDS is shown in Fig. 7B. As shown in Fig. 7B, the PDS includes "segment_type" indicating the segment is a PDS, "segment_length indicating a data length of the PDS, "palette_id" uniquely identifying the palette included in the PDS, "palette_version_number" indicating a version of the PDS within the Epoch, and "palette_entry" indicating information for each entry. In detail, the palette entry indicates a red color value (Cr value), a blue color value (Cb value), a brightness value (Y value), and a transparency value (T value) of each entry.

The following describes the WDS.

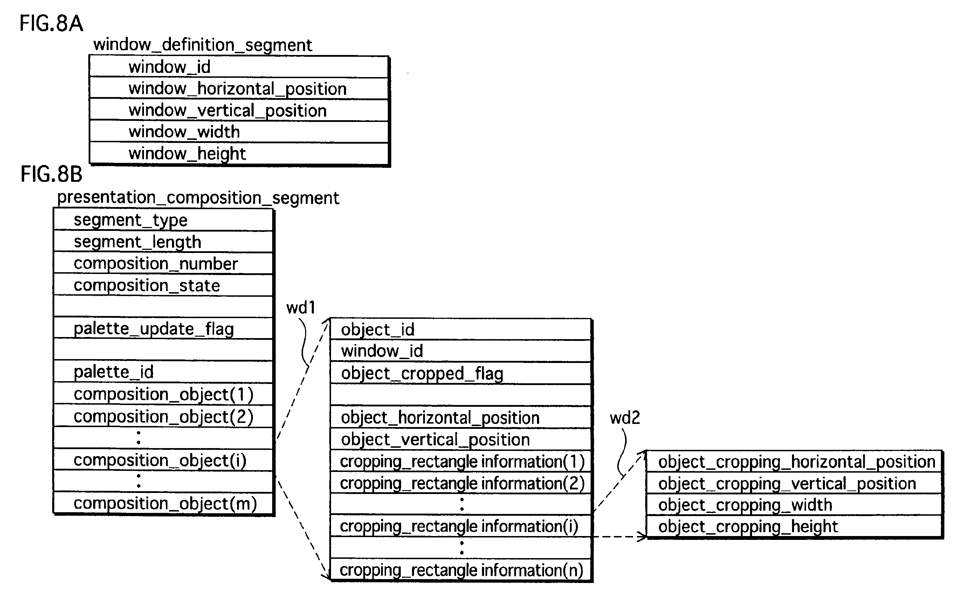

The "Window_Definition_segment" is a functional segment that defines the rectangular area on the Graphics Plane. As mentioned before, the memory management can be consecutive in the Epoch in a case where deleting and rendering are performed only in the rectangular area on the Graphics Plane within the Epoch. The rectangular area on the Graphics Plane is referred to as a "window" , and is defined by the WDS. Fig. 8A shows syntax of the WDS. As shown in Fig. 8A, the WDS includes "window_id" uniquely identifying the window on the Graphics Plane, "window_horizontal_position" indicating a horizontal address of a top left pixel of the window on the Graphics Plane, "window_vertical_position" indicating a vertical address of the top left pixel of the window on the Graphics Plane, "window_width" indicating a width of the window on the Graphics Plane, "window_height" indicating a height of the window on the Graphics Plane.

The above describes the ODS, PDS, WDS and END. The following describes the PCS.

The PCS is a functional segment for composing an interactive screen. The PCS has syntax shown in Fig. 8B. As shown in Fig. 8B, the PCS includes "segment_type", "segment_length","composition_number","composition_state", "palette_update_flag", "pallet_id", and "Composition_Object ((1) to (m))".

The "composition_number" identifies the Graphics Update in the DS using any of the numbers in a range from 0 to 15.

The "composition_state" indicates whether a Display Set having this PCS at its start is Normal Case, Acquisition Point, or Epoch Start.

The "palette_update_flag" indicates whether Pallet Only Display Update has been performed in this PCS.

The "palette_id" indicates a palette to be used for the Pallet Only Display Update.

The "composition_object" ((1) to (n)) is information which indicates how to control each window in the DS to which this PCS belongs. A dashed line wd 1 in Fig. 8B shows, in detail, an internal structure of composition_object (i). As shown by the dashed line wd 1, the composition_object (i) includes "object_id", "window_id", "object_cropped_flag" "object_horizontal_position", "object_vertical_position", and "cropping_rectangle information (1), (2),... (n)".

The "object_id" is an identifier of an ODS to be shown in a window corresponding to the Composition_Object (i).

The "window_id" indicates the window to which the Graphics Object is allocated. Up to two Graphics Objects may be assigned to one window.

The "object_cropped_flag" is a flag to switch between display and non-display of a cropped Graphics Object in the object buffer. When the value of the "object_cropped_flag" is set to one, the cropped Graphics Object is displayed. When the value is set to zero, the cropped Graphics Object is not displayed.

The "object_horizontal_position" indicates a horizontal address of a top left pixel of the Graphics Object in the Graphics Plane.

The "object_vertical_position" indicates a vertical address of the top left pixel of the Graphics Object in the Graphics Plane.

The "cropping_rectangle information (1), (2),... (n)" are information components which are effective when the "object_cropped_flag" is set to one. A dashed line wd2 shows, in detail, an internal structure of cropping_rectangle information (i). As shown by the dashed line wd2, the cropping_rectangle information (i) includes "object_cropping_horizontal_position", "object_cropping_vertical_position", "object_cropping_width", and "object_cropping_height".

The "object_cropping_horizontal_position" indicates a horizontal address of a top left corner of a crop rectangle in the object buffer. The crop rectangle is a frame for cropping out part of the Graphics Object.

The "object_cropping_vertical_position" indicates a vertical address of the top left corner of the crop rectangle in the object buffer.

The "object_cropping_width" indicates a width of the crop rectangle in the object buffer.

The "object_cropping_height" indicates a height of the crop rectangle in the object buffer.

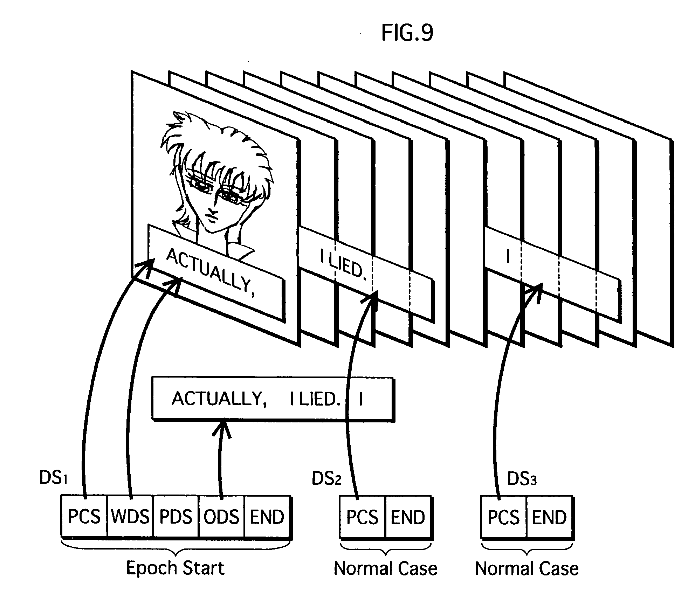

The above describes the syntax of the PCS. The following describes the PCS using a concrete example. Subtitles are displayed as shown in Fig. 6. The three subtitles "Actually", "I" and "lied" are displayed, in the stated order, by performing writing into the Graphics Plane three times, in accordance with progression of video reproduction. Fig. 9 shows example description to realize such subtitle display. In Fig. 9, an Epoch includes a DS 1 (Epoch Start), a DS 2 (Normal Case), and a DS 3 (Normal Case). The DS 1 includes a WDS defining a window in which the subtitles are to be displayed, an ODS indicating "Actually, I lied.", and a first PCS. The DS 2 (Normal Case) includes a second PCS, and the DS 3 (Normal Case) includes a third PCS.

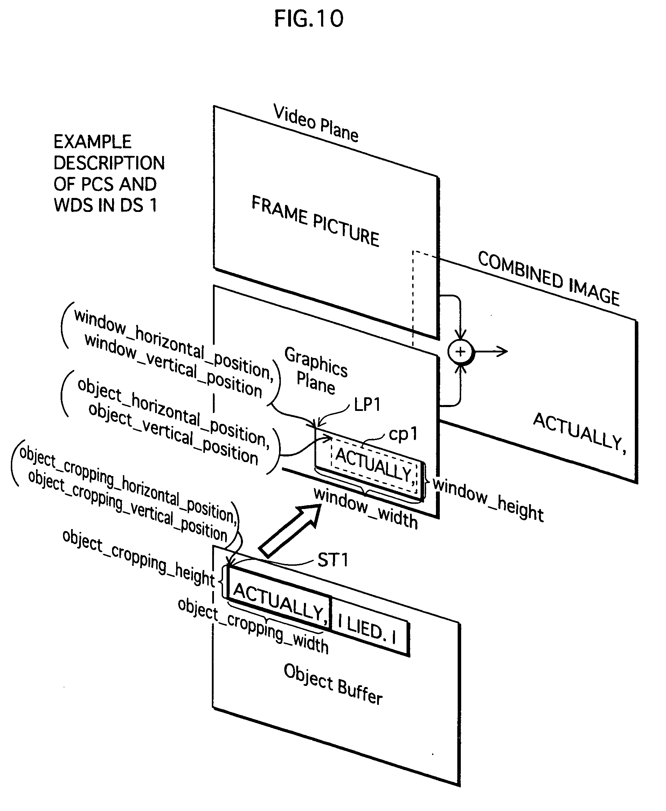

The following explains how each PCS is described. Figs. 10 to 12 show examples of the WDS and PCSs included in the Display Sets. Fig. 10 illustrates, as an example, description of the PCS included in the DS 1.

In Fig. 10, window_horizontal_position and window_vertical_position of the WDS indicate coordinates LPI of a top left corner of a window on the Graphics Plane, and window_width and window_height indicate a width and a height of the window.

In Fig. 10, object_cropping_horizontal_position and object_cropping_vertical_position (crop information) indicate a reference point ST 1 of a crop rectangle in a system of coordinates having its origin at coordinates of the top left corner of the Graphics Object in the object buffer. The crop rectangle is an area (indicated by thick lines in Fig. 10) having a width indicated by object_cropping_width and a height indicated by object_cropping_height, from the ST 1. The cropped Graphics Object is placed in an area cp 1 indicated by dashed lines which has a reference point indicated by object_horizontal_position and object_vertical_position (top left corner) in a system of coordinates of the Graphics Plane. In this way, the subtitle "Actually, is written into the window on the Graphics Plane. Furthermore, the subtitle "Actually," is combined with a picture, to be displayed.

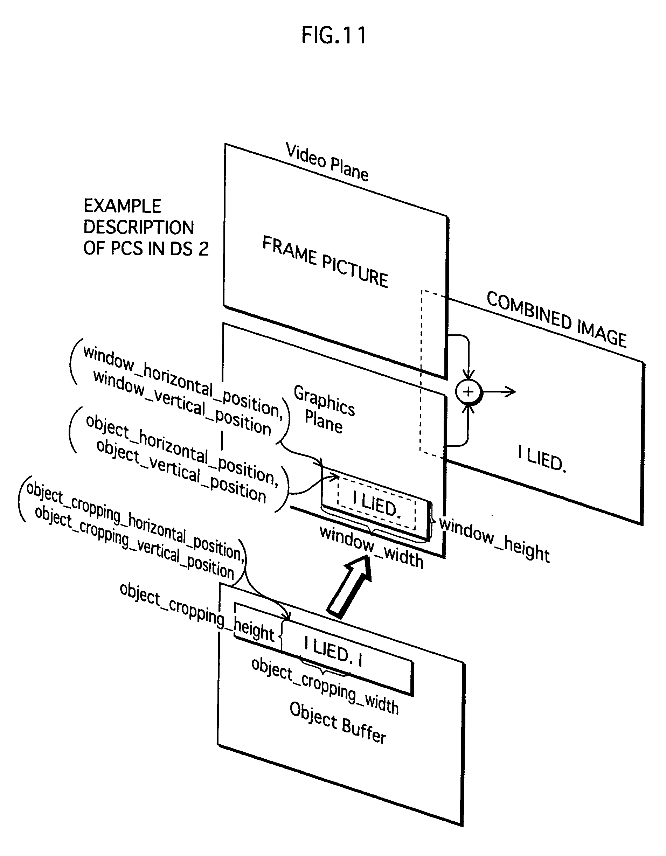

Fig. 11 illustrates, as an example, description of the PCS in the DS 2. The description of the WDS is the same in Figs. 10 and 11, and therefore not described in the following. On the other hand, description of crop information is different between Figs. 10 and 11. As seen from Fig. 11, object_cropping_horizontal_position, and object_cropping_vertical_position (crop information) indicate coordinates of a top left corner of a rectangle showing "I lied", within the subtitles "Actually, I lied. I" on the object buffer. Furthermore, object_cropping_heightandobject_cropping_width indicate a height and a width of the rectangle showing "I lied.". Thus, the subtitle "I lied." is written into the window on the Graphics Plane. The subtitle "I lied. " is combined with a picture, to be displayed.

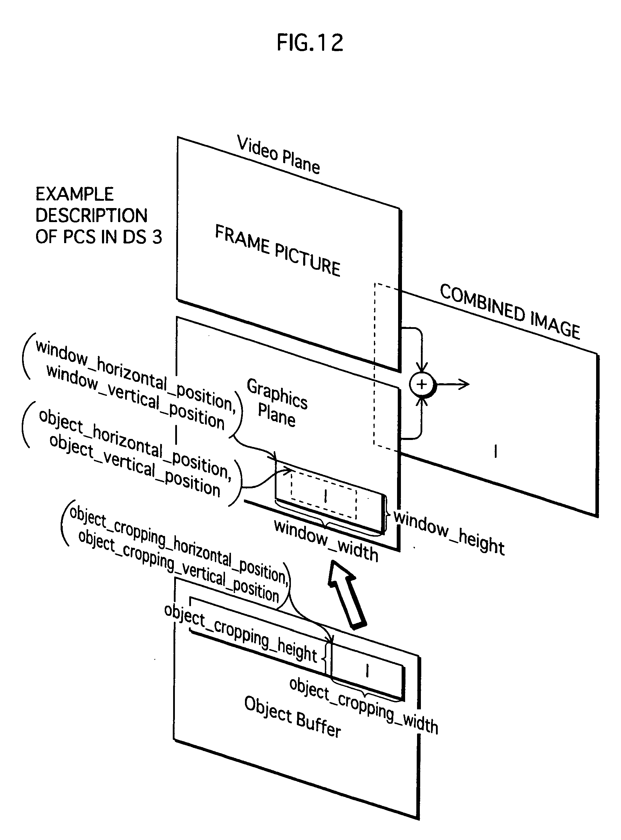

Fig. 12 illustrates, as an example, description of the PCS in the DS 3. As seen from Fig. 12, the description of the WDS is the same in Figs. 10 and 12, and therefore not described in the following. On the other hand, description of crop information is different between Figs. 10 and 12. As seen from Fig. 12, object_cropping_horizontal_position and object_cropping_vertical_position (crop information) indicate coordinates of a top left corner of a rectangle showing "I" in the subtitles "Actually, I lied. I" on the object buffer. Furthermore,object_cropping_height and object_cropping_width indicate a height and a width of the rectangle showing the subtitle "I". In this way, the subtitle "I" is written into the window on the Graphics Plane. The subtitle "I" is combined with a picture, to be displayed.

By describing the PCSs in the DS 1, DS 2 and DS 3 as explained above, an effect of displaying the subtitles can be achieved. Thus, a diversity of descriptions of PCSs enable various display effects such as Fade In/Out, Wipe In/Out, and Scroll to be realized, according to the present invention.

The functional segments ODS and PCS described above each additionally include a DTS and a PTS.

A DTS of the ODS indicates a time at which decoding of the ODS needs to be started, with a time accuracy of 90 KHz. A PTS of the ODS indicates a time at which the decoding should be ended.

A DTS of the PCS indicates a time at which the PCS needs to be loaded onto the buffer of the reproducing apparatus 200.

A PTS of the PCS indicates a time at which the screen is updated using the PCS.

As described before, the graphics stream composing the bitmap subtitles includes control information to realize display of the subtitles, and time stamps indicating process times on the time axis of reproduction. Therefore, the reproducing apparatus 200 can achieve display of the subtitles only by processing the graphics stream. The above describes the AVClip. The following describes the Clip information.

The Clip information (XXX.CLPI) is management information for the AVClip. The Clip information (XXX.CLPI) includes attribute information for the video and audio streams, and an EP_map which is a reference table used when a skip operation is performed.

The attribute information (Attribute) includes attribute information for the video streams (Video attribute information), the number of pieces of attribute information (Number), attribute information for each of the audio streams multiplexed into the AVClip (Audio attribute information #1 to #m). The Video attribute information indicates a format of compressing the video streams (Coding), a resolution of each of pieces of video data composing the video streams (Resolution), an aspect ratio (Aspect), and a frame rate (Frame Rate).

The Audio attribute information (#1 to #m) indicates a format of compressing the audio stream (Coding), a channel number of the audio stream (Ch.), a language of the audio stream (Lang) and a sampling frequency.

The Resolution in the Clip information indicates a resolution of the video streams multiplexed into the AVClip.

The above describes the Clip information. The following describes a subtitle content provided by the server apparatus 500. To start with, a bitmap subtitle content is described.

The AVClip is constituted by a plurality of types of elementary streams as described above, but a bitmap subtitle content is constituted only by graphics streams. As well as the graphics stream stored in the BD-ROM 100, a graphics stream forming a subtitle content is composed of functional segments PCS, WDS, PDS, ODS, and END. Each of the functional segments additionally include a PTS and a DTS. These time stamps enable the subtitle content to be displayed in synchronization with the video stream stored in the BD-ROM 100.

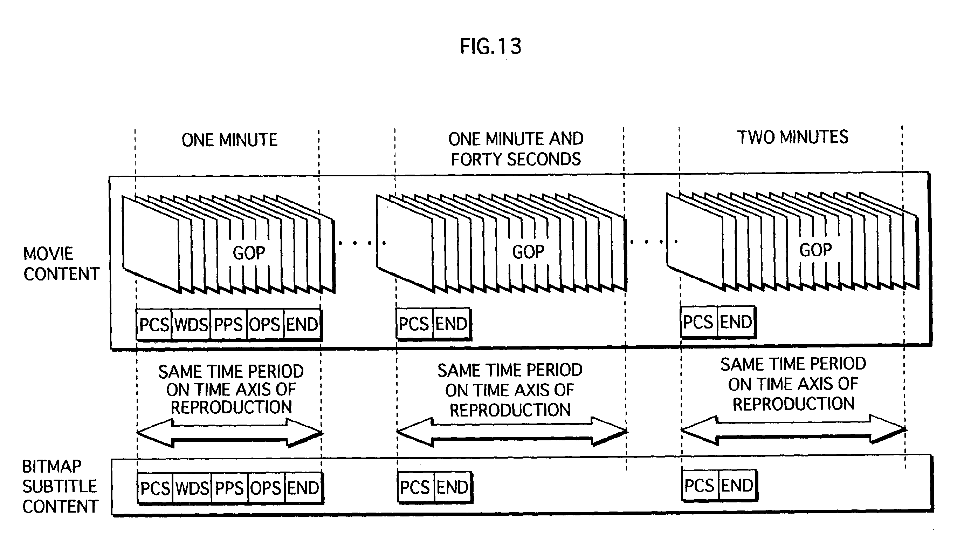

Fig. 13 compares the movie content and the subtitle content. In Fig. 13, the video stream and the graphics stream included in the movie content are shown in the upper part, and the graphics stream of the subtitle content is shown in the lower part. The upper part shows GOPs (Display Sets) which are respectively reproduced when one minute, one minute and forty seconds, and two minutes have passed since a start of reproduction of the AV stream.

Also, the lower part in Fig. 13 shows Display Sets which are respectively reproduced when one minute, one minute and forty seconds, and two minutes have passed since the start of reproduction of the AV stream. These reproduction timings can be set by assigning desired values to a PTS and a DTS added to each of PCS, WDS, PDS and ODS included in the Display Sets. Which is to say, by adding time stamps to the functional segments constituting the subtitle content, the Display Sets are synchronized with corresponding GOPs at high time accuracy. The server apparatus 500 has bitmap subtitle contents compatible with a variety of resolutions. An appropriate one of such subtitle contents is downloaded from the server apparatus 500 to the reproducing apparatus 200, in response to a request from the reproducing apparatus 200. In this way, the reproducing apparatus 200 can achieve display of subtitles at an appropriate resolution, regardless of any combination of the display apparatus 300 and the movie content.

The above describes the bitmap subtitle content.

The following describes a text subtitle content. A text subtitle content is formed by associating text data with information necessary to realize subtitle display. A text subtitle has a smaller amount of data than a bitmap subtitle, and can be therefore transmitted in a short time period even through a line having a relatively slow transmission rate. For this reason, when a line having a limitation regarding a transmission rate is used, a text subtitle is preferable.

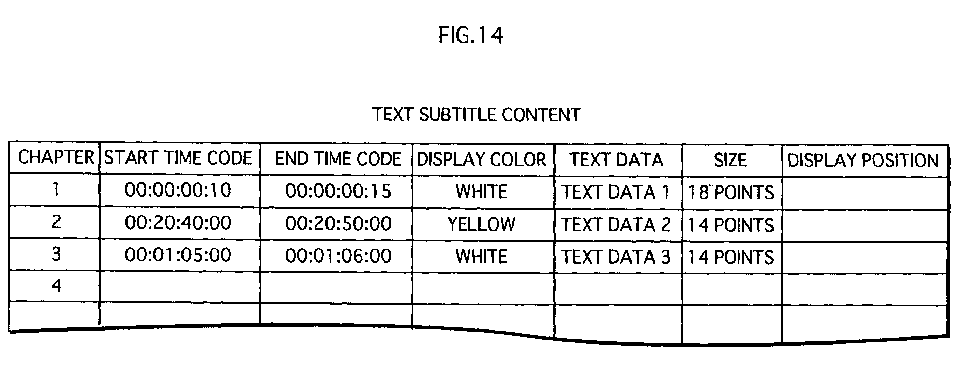

Fig. 14 illustrates, as an example, a text subtitle content. As shown in Fig. 14, a text subtitle content is formed by associating text data with a chapter number indicating a chapter including a subtitle, a "start time code" at which display of the subtitle starts, an "end time code" at which display of the subtitle ends, "a display color" of the subtitle, a "size" of the subtitle, and a display position of the subtitle. As for the subtitle content shown in Fig. 14, the "size" is set so as to be compatible with either SDTV or HDTV.

Subtitles are rendered based on such a text subtitle content, using a format called outline fonts (also referred to as vector fonts). Therefore, each character is represented based on outlines and endpoints. This allows outlines of the characters to be enlarged smoothly, so that the subtitles are displayed at a designed size. In addition, according to the first embodiment, when a resolution ratio is not 1:1 between the display apparatus 300 and the content, the reproducing apparatus 200 enlarges/shrinks the characters in outline fonts, so that the characters become compatible with the resolution of the display apparatus 300. After this, the reproducing apparatus 200 achieves display of the subtitles based on a start time code and an end time code. Note that, in the present description, "enlarging" means representing data using more pixels than original pixels, and "shrinking" means representing data using fewer pixels than original pixels.

Since such enlarging/shrinking is not performed on characters in bitmap fonts, the subtitles can be clearly displayed without jaggies and blur representation, based on the text subtitle content.

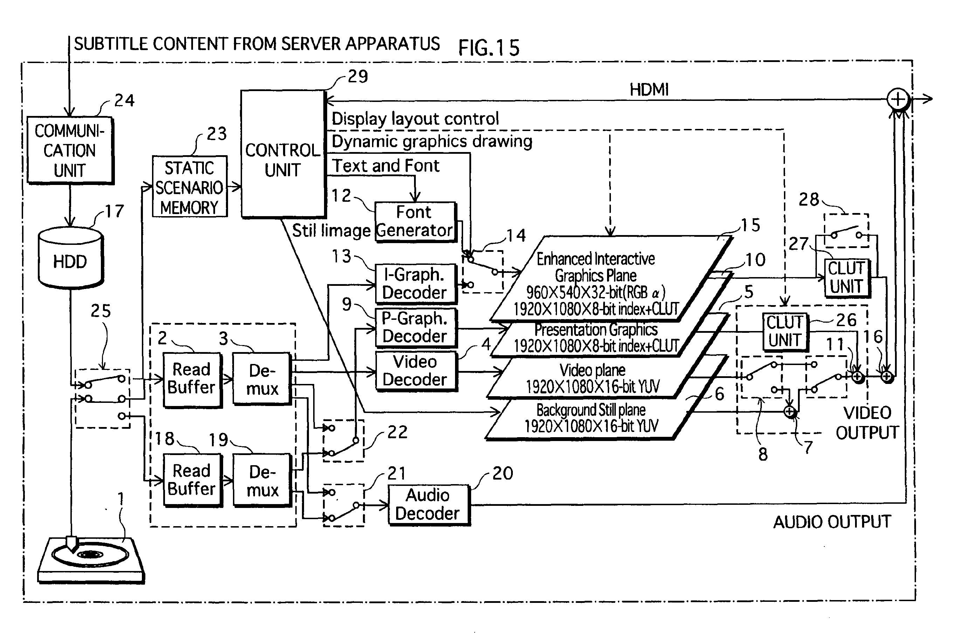

The text data may be alternatively displayed at a position determined based on window_horizontal_position and window_vertical_position of a WDS as shown in Fig. 10. Since the display position is precisely defined during a manufacturing process of the graphics stream in both cases, easy-to-see display of subtitles can be attained. The above describes the subtitle content. The following describes the reproducing apparatus 200 relating to the first embodiment of the present invention. Fig. 15 illustrates an internal structure of the reproducing apparatus 200. The reproducing apparatus 200 is industrially manufactured based on the internal structure shown in Fig. 15. The reproducing apparatus 200 relating the first embodiment is primarily constituted by two parts; a system LSI and a driving device. These parts are mounted on a cabinet and a substrate of the reproducing apparatus 200. The system LSI is an integrated circuit including a variety of processors having functions of a reproducing apparatus. This reproducing apparatus 200 is constituted by a BD-ROM drive 1, a read buffer 2, a demultiplexer 3, a video decoder 4, a video plane 5, a Background Still plane 6, a combining unit 7, a switch 8, a P-Graphics decoder 9, a Presentation Graphics plane 10, a combining unit 11, a font generator 12, an I-Graphics decoder 13, a switch 14, an Enhanced Interactive Graphics plane 15, a combining unit 16, an HDD 17, a read buffer 18, a demultiplexer 19, an audio decoder 20, a switch 21, a switch 22, a static scenario memory 23, a communication unit 24, a switch unit 25, a CLUT unit 26, a CLUT unit 27, a switch 28, and a control unit 29.

The BD-ROM drive 1 performs loading and ejecting of the BD-ROM 100, and accesses the BD-ROM 100.

The read buffer 2 is a FIFO memory for storing TS packets read from the BD-ROM 100 in a first-in first-out order.

The demultiplexer (De-MUX) 3 retrieves TS packets from the read buffer 2, and converts the TS packets into PES packets. Among the PES packets obtained by the conversion, the demultiplexer 3 outputs predetermined PES packets to one of the video recorder 4, the audio decoder 20, the P-Graphics decoder 9, and the I-Graphics decoder 13.

The video decoder 4 decodes the PES packets output from the demultiplexer 3, to obtain uncompressed pictures, and writes the obtained pictures into the video plane 5.

The video plane 5 is a plane for storing the uncompressed pictures. A plane is a memory area, in a reproducing apparatus, for storing pixel data for one screen. Here, a plurality of planes may be provided in the reproducing apparatus 200, so that stored contents in the planes are added together for each pixel and a resulting image is output. Thus, a plurality of image contents can be combined together. The video plane 5 has a resolution of 1920 × 1080. The video data stored in the video plane 5 is constituted by pixel data expressed using 16-bit YUV values.

The Background Still plane 6 is a plane for storing a still image to be used as a background image. The Background Still plane 6 has a resolution of 1920 × 1080. The video data stored in the Background Still plane 6 is constituted by pixel data expressed using 16-bit YUV values.

The combining unit 7 combines the uncompressed video data stored in the video plane 5, with the still image stored in the Background Still plane 6.

The switch 8 switches between an operation of outputting the uncompressed video data stored in the video plane 5 without modification and an operation of combining the uncompressed video data in the video plane 5 with the stored content in the Background Still plane 6 and outputting the resulting data.

The P-Graphics decoder 9 decodes a graphics stream read from the BD-ROM 100 or the HDD 17, and writes raster graphics into the Presentation Graphics plane 10. As a result of the decoding of the graphics stream, a subtitle appears on the screen.

The Presentation Graphics plane 10 is a memory having an area for one screen, and can store raster graphics for one screen. The Presentation Graphics plane 10 has a resolution of 1920 × 1080. Each pixel of the raster graphics stored in the Presentation Graphics plane 10 is expressed by an 8-bit index color. By converting the index color using a Color Lookup Table (CLUT), the raster graphics stored in the Presentation Graphics plane 10 is displayed.

The combining unit 11 combines one of (i) the uncompressed video data and (ii) the uncompressed pictured data that has been combined with the stored content in the Background Still plane 6, with the stored content in the Presentation Graphics plane 10.

The font generator 12 has outline fonts. Using the outline fonts, the font generator 12 renders a text code obtained by the control unit 29, to draw characters. The rendering is performed on the Enhanced Interactive Graphics plane 15.

The I-Graphics decoder 13 decodes an interactive graphics stream read from the BD-ROM 100 or the HDD 17, and writes raster graphics into the Enhanced Interactive Graphics plane 15. As a result of the decoding of the interactive graphics stream, a button forming an interactive screen appears on the screen.

The switch 14 selects one of a font string generated by the font generator 12, a content directly drawn by the control unit 29, and the button generated by the I-Graphics decoder 13, and puts the selected one into the Enhanced Interactive Graphics plane 15.

The Enhanced Interactive Graphics plane 15 is a plane for a display use. The Enhanced Interactive Graphics plane 15 is compatible with a resolution of 1920 (horizontal) $\times$ 1080 (vertical), and a resolution of 960 (horizontal) $\times$ 540 (vertical).

The combining unit 16 combines (i) the uncompressed video data, (ii) the video data that has been combined with the stored content in the Background Still plane 6, and (iii) the video data that has been combined with the stored contents in the Presentation Graphics plane 10 and the Background Still plane 6, with the stored content in the Enhanced Interactive Graphics plane 15.

The HDD 17 is an internal medium for storing a subtitle content downloaded from the server apparatus 500.

The read buffer 18 is a FIFO memory for storing TS packets read from the HDD 17 in a first-in first-out order.

The demultiplexer (De-MUX) 19 retrieves TS packets from the read buffer 18, and converts the TS packets into PES packets. Among the PES packets obtained by the conversion, the demultiplexer 19 outputs desired PES packets to one of the audio decoder 20 and the P-Graphics decoder 9.

The audio decoder 20 decodes the PES packets from the demultiplexer 19, to output uncompressed audio data.

The switch 21 switches an input source to the audio decoder 20, between the BD-ROM 100 and the HDD 17.

The switch 22 switches an input source to the P-Graphics decoder 9. The switch 22 enables a presentation graphics stream read from the HDD 17 and a presentation graphics stream read from the BD-ROM 100 to be selectively put into the P-Graphics decoder 9.

The static scenario memory 23 is a memory for storing current Clip information, which is Clip information that is currently processed, among a plurality of pieces of Clip information stored in the BD-ROM 100.

The communication unit 24 accesses the server apparatus 500 in response to a request from the control unit 29 to download a subtitle content from the server apparatus 500.

The switch 25 is used to put a variety of data read from the BD-ROM 100 and the HDD 17 into a selected one of the read buffer 2, the read buffer 18, the static scenario memory 23, and the communication unit 24.

The CLUT unit 26 converts index colors for the raster graphics stored in the Presentation Graphics plane 10, based on Y-, Cr-, and Cb-values indicated by PDS.

The CLUT unit 27 converts index colors for the raster graphics stored in the Enhanced Interactive Graphics plane 15, based on Y-, Cr-, and Cb-values indicated by PDS included in the presentation graphics stream.

The switch 28 enables the conversion performed by the CLUT unit 27 to be through-output.

The control unit 29 obtains resolution information indicating the resolution of the display apparatus 300, through the HDMI. The control unit 29 then compares the obtained resolution with the resolution shown by the Clip information in order to calculate a resolution ratio. If the resolution ratio is 1.0:1.0, the graphics stream multiplexed into the AVClip is displayed without a change. If the resolution ratio is not 1.0:1.0, the subtitle content stored in the HDD 17 is displayed.

To achieve display of subtitles based on a text subtitle content, the control unit 29 provides a text and a font with the font generator 12, to cause the font generator 12 to generate a font string. The control unit 29 has the font generator 12 place the generated font string on the Enhanced Interactive Graphics plane 15. Drawing of characters is made on the Enhanced Interactive Graphics plane 15 in this way. Subsequently, the control unit 29 instructs enlarging/ shrinking of the stored content in the video plane 5. After this, the control unit 29 causes the combining unit 16 to combine the stored content in the video plane 5 with the stored content in the Enhanced Interactive Graphics plane 15 (Display layout control).

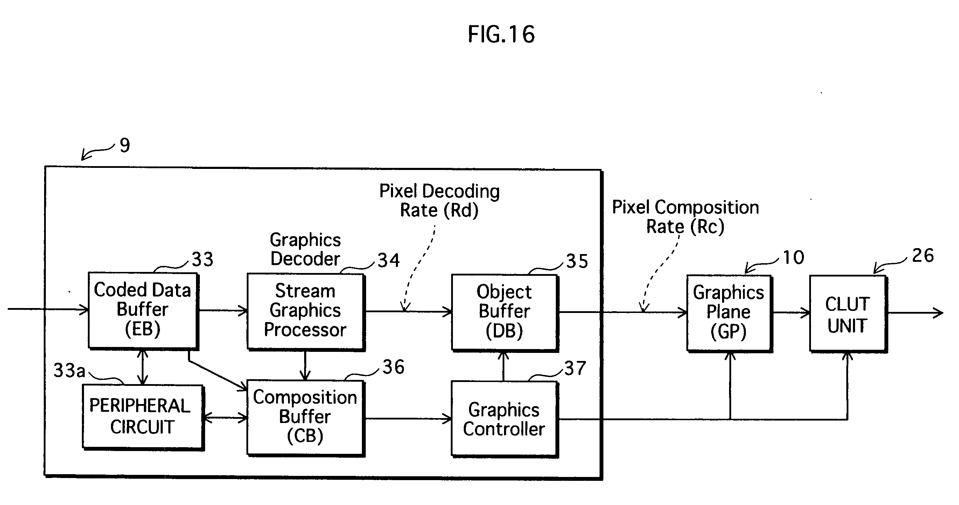

The following describes an internal structure of the P-Graphics decoder 9, with reference to Fig. 16. As shown in Fig. 16, the P-graphics decoder 9 is constituted by a Coded Data Buffer 33, a peripheral circuit 33a, a Stream Graphics Processor 34, an Object Buffer 35, a Composition Buffer 36, and a Graphics Controller 37.

The Coded Data Buffer 33 is a buffer for storing functional segments together with a DTS and a PTS.

The peripheral circuit 33a is a wired logic to realize transmission between the Coded Data Buffer 33 and the Stream Graphics Processor 34 and transmission between the Coded Data Buffer 33 and the Composition Buffer 36. In detail, when a current time matches a time shown by a DTS of an ODS, the peripheral circuit 33a transmits the ODS from the Coded Data Buffer 33 to the Stream Graphics Processor 34. Furthermore, when a current time matches a time shown by a DTS of a PCS/PDS, the peripheral circuit 33a transmits the PCS/PDS from the Coded Data Buffer 33 to the Composition Buffer 36.

The Stream Graphics Processor 34 decodes the ODS. In addition, the Stream Graphics Processor 34 writes uncompressed bitmap data which is formed based on index colors obtained by the decoding, into the Object Buffer 35 as a Graphics Object.

The Object Buffer 35 stores the Graphics Object which is obtained by the decoding performed by the Stream Graphics Processor 34.

The Composition Buffer 36 is a memory in which the PCS/PDS is located.

The Graphics Controller 37 decodes the PCS located in the Composition Buffer 36, to perform control in accordance with the PCS, at a timing determined based on a PTS added to the PCS. The above describes the internal structure of the P-Graphics decoder 9.

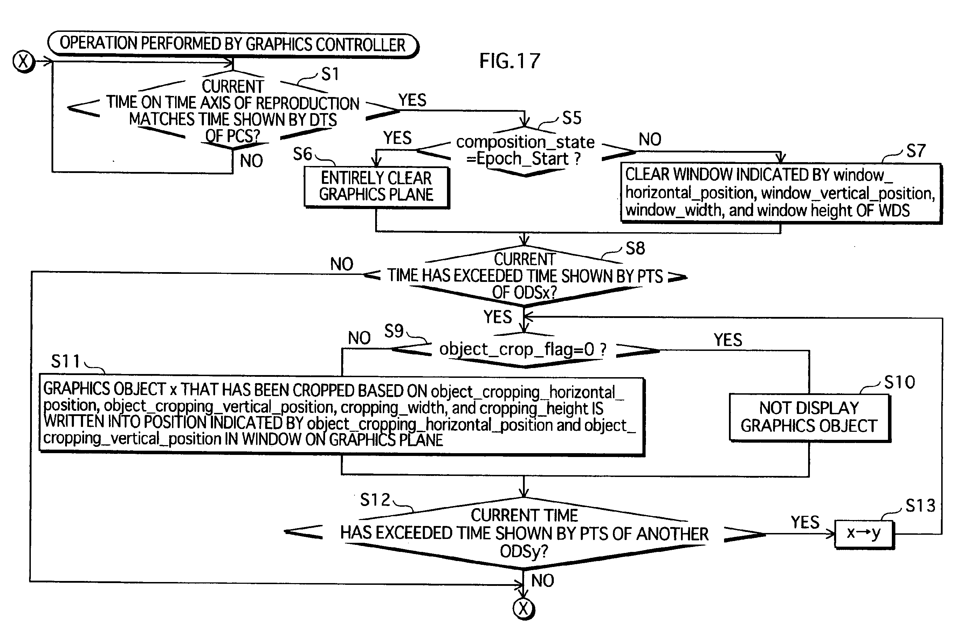

The following describes the Graphics Controller 37. The Graphics Controller 37 performs a procedure illustrated in a flow chart of Fig. 17.

A step S1 is a main routine of the procedure shown in the flow chart. In the step S1, the Graphics Controller 37 waits until a predetermined event occurs.

In the step S1, the Graphics Controller 37 judges whether a current time along a time axis of reproduction of the movie content matches a time shown by a DTS of a PCS. If judged in the affirmative, the Graphics Controller 37 performs operations from the step S5 to a step S13.

In the step S5, the Graphics Controller 37 judges whether composition_state in the PCS indicates Epoch_start. If judged in the affirmative, the Graphics Controller 37 entirely clears the Presentation Graphics plane 10 (step S6). If judged in the negative, the Graphics Controller 37 clears a window defined by window_horizontal_position, window_vertical_position, window_width, and window_height of a WDS (step S7).

A step S8 is performed after the clear operation in one of the steps S6 and S7. In the step S8, the Graphics Controller 37 judges whether the current time has exceeded a time shown by a PTS of any ODSx. This is because it takes a long time to clear the Presentation Graphics plane 10 entirely. Therefore, decoding of the ODSx may be completed before the Presentation Graphics plane 10 is entirely cleared. The Graphics Controller 37 examines whether this is the case in the step S8. If judged in the negative in the step S8, the procedure returns to the main routine. If judged in the affirmative, the Graphics Controller 37 performs operations from steps S9 to S11. In the step S9, the Graphics Controller 37 judges whether object_crop_flag is set to zero. If judged in the affirmative, the graphics object is not displayed (step S10).

If judged in the negative in the step S9, the graphics object that has been cropped based on object_cropping_horizontal_position, object_cropping_vertical_position, cropping_width, and cropping_height is written into a position defined by object_cropping_horizontal_position and object_cropping_vertical_position in the window on the Presentation Graphics plane 10 (step S11). As a result of the above-described steps, one or more graphics objects can be drawn in the window.

In a step S12, the Graphics Controller 37 judges whether the current time has exceeded a time shown by a PTS of another ODSy. If decoding of the ODSy is completed before the writing of the ODSx into the Presentation Graphics plane 10 is completed, the procedure goes to the step S9 through a step S13. Thus, the Graphics Controller 37 performs the operations from the steps S9 to S11 for the ODSy.

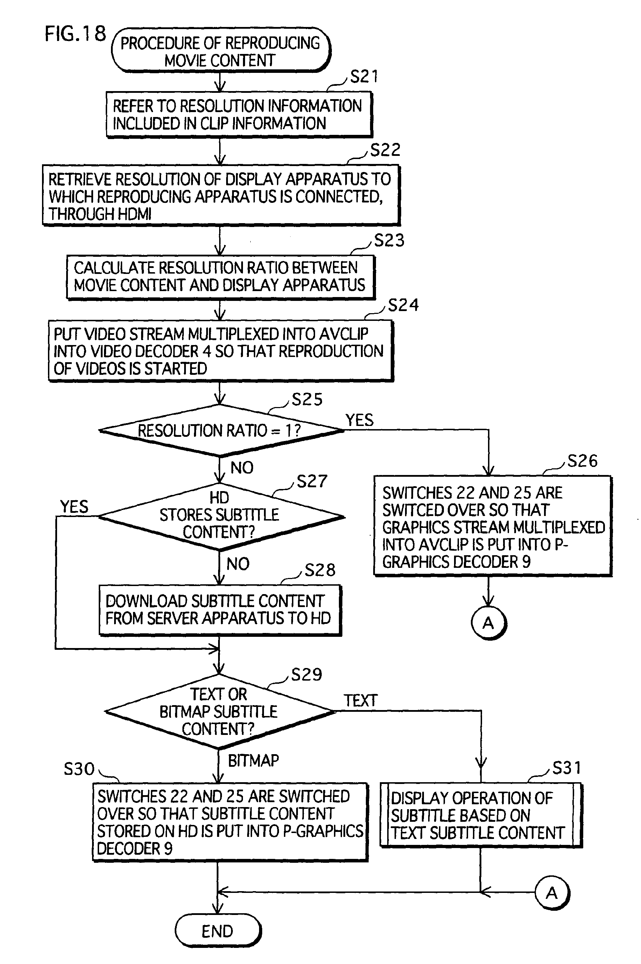

Fig. 18 is a flow chart illustrating a procedure of reproducing a movie content. In a step S21, the control unit 29 refers to a resolution shown by Clip information in the movie content. In a step S22, the control unit 29 retrieves, through the HDMI, the resolution of the display apparatus 300 to which the reproducing apparatus 200 is connected.

In a step S23, the control unit 29 calculates the resolution ratio between the movie content and the display apparatus 300. In a step S24, video streams multiplexed into an AVClip in the movie content are put into the video decoder 4. Thus, the control unit 29 starts reproduction of videos. In a step S25, the control unit 29 judges whether the resolution ratio is 1:1. If judged in the affirmative, the switches 22 and 25 are switched over in a step S26, so that graphics streams multiplexed into the AVClip are put into the P-Graphics decoder 9. Thus, the control unit 29 achieves display of subtitles.

In a step S27, the control unit 29 judges whether the HD stores a subtitle content. If judged in the affirmative, the procedure skips a step S28 and goes to a step S29. If judged in the negative, the control unit 29 downloads a subtitle content from the server apparatus 500 to the HD in the step S28.

In a step S29, the control unit 29 judges whether the subtitle content is text-formatted or bit-mapped. If the subtitle content is bit-mapped, the switches 22 and 25 are switched over in a step S30, so that the subtitle content on the HD is put into the P-Graphics decoder 9. Thus, the reproducing apparatus 200 achieves display of subtitles.

If the subtitle content is text-formatted, the control unit 29 performs a display operation of subtitles based on a text subtitle content in a step S31.

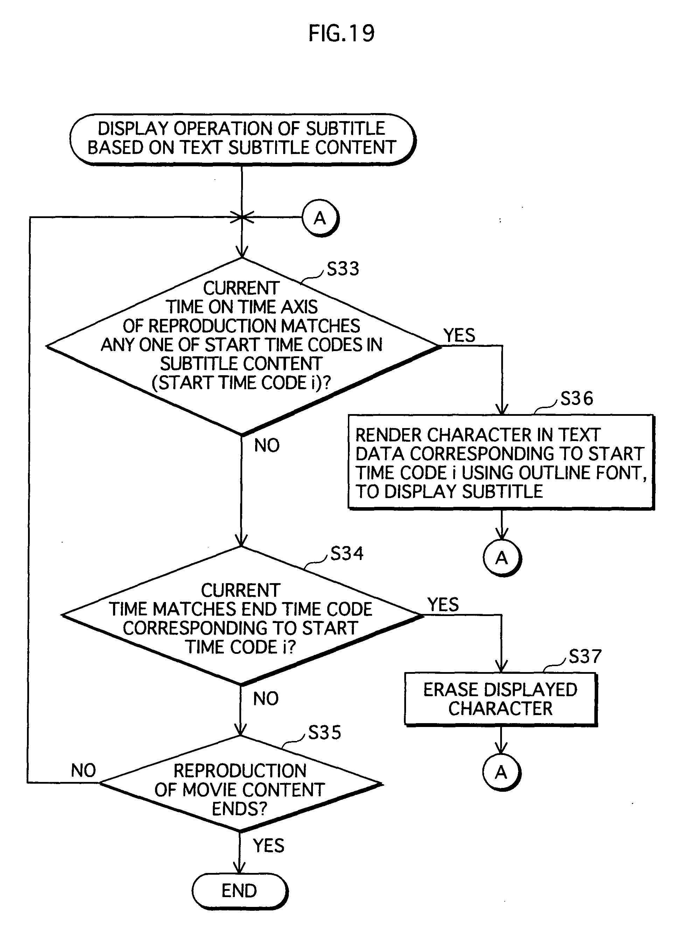

Fig. 19 is a flow chart illustrating a procedure of the display operation of subtitles based on a text subtitle content. The procedure shown in Fig. 19 including steps S33 to S37 corresponds to the procedure including the steps S1 to S13 shown in Fig. 17. According to the procedures, subtitle display is performed in accordance with progression of reproduction of video streams. It is the Graphics Controller 37 which reproduces the graphics streams multiplexed into the AVClip. However, it has to be the control unit 29 which reproduces the text data. The control unit 29 reproduces the text data according to the procedure shown in Fig. 19.

Out of the steps S33 to S37, the steps S33 to S35 constitute a loop operation to judge whether a predetermined event for any one of the steps S33 to S35 takes place.

In the step S33, the control unit 29 judges whether a current time, on the time axis of reproduction of the movie content, matches any of start time codes in the subtitle content. If judged in the affirmative, the matched start time code is treated as a start time code i. In a next step S36, characters in text data corresponding to the start time code i are rendered using outline fonts, to be displayed.

In the step S34, the control unit 29 judges whether the current time, on the time axis of reproduction of the movie content, matches an end time code corresponding to the start time code i. If judged in the affirmative, the displayed characters are erased in the step S37.

In the step S35, the control unit 29 judges whether the reproduction of the movie content has ended. If judged in the affirmative, the procedure shown in the flow chart ends.

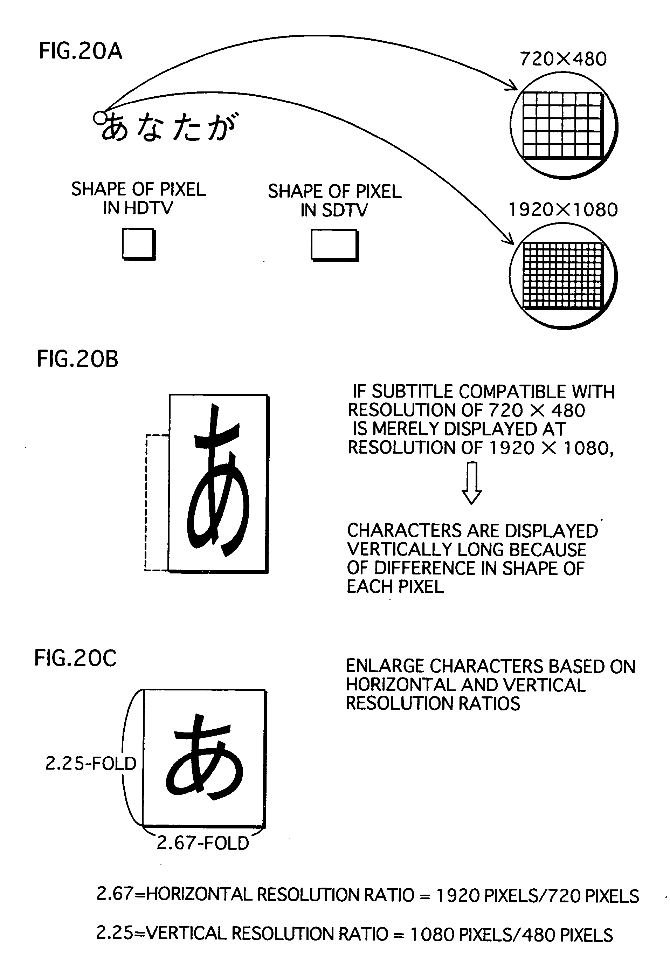

The following describes the operation performed in the step S36, that is to say, an enlarging operation for outline fonts based on the resolution ratio, with reference to Figs. 20A to 20C. A predetermined size compatible with only one of SDTV and HDTV is selected for subtitles , according to the subtitle content. As is the case of the graphics streams, this reflects a demand of producers of the movie content, who aim to lower costs by not providing subtitles for one of SDTV and HDTV. Therefore, even though the display apparatus 300 is compatible with HDTV, the subtitle content may only have a size compatible with SDTV. If such is the case, there is no other choice than displaying subtitles compatible with SDTV on the HDTV display apparatus 300. However, if the subtitles compatible with SDTV are displayed, without any modification, on the HDTV display apparatus 300 having a high resolution, the subtitles occupy a smaller part of the entire screen of the display apparatus 300. This results in a bad balance.

To solve this problem, when achieving display of the subtitles based on the subtitle content, the control unit 29 calculates horizontal and vertical ratios in resolution between the display apparatus 300 and the subtitle content. The control unit 29 then enlarges/shrinks outline fonts horizontally and vertically, based on the calculated horizontal and vertical ratios in resolution. The enlargement operation is performed in this manner because each pixel has a different shape between SDTV and HDTV. Fig. 20A illustrates a shape of each pixel in SDTV and HDTV. An SDTV display apparatus has pixels each of which has a horizontally-long rectangular shape. On the other hand, an HDTV display apparatus has pixels each of which has a square shape. Because of this difference, if fonts designed to be compatible with a resolution of SDTV are merely enlarged, each of the characters composing a subtitle is displayed vertically-long as shown in Fig. 20B. This does not provide a favorable view. Therefore, the fonts are enlarged at a different rate in each of horizontal and vertical directions.

This process is explained using a case, as an example, where subtitles are displayed on an HDTV display apparatus, based on a subtitle content compatible with SDTV. Because the display apparatus has a resolution of 1920 × 1080, and the subtitle content has a resolution of 720 × 480, a horizontal ratio in resolution is:

$$\texttt{A horizontal ratio in resolution = 1920 pixels/720 pixels}$$

$$\texttt{≈ 2.67}$$

A vertical ratio in resolution is:

$$\texttt{A vertical ratio in resolution = 1080 pixels/480 pixels}$$

$$\texttt{≈ 2.25}$$

Based on these horizontal and vertical ratios in resolution, outline fonts having a size compatible with SDTV are enlarged 2.67-fold horizontally, and 2.25-fold vertically as shown in Fig. 20C. By rendering the text data using the fonts enlarged in this way and performing a display operation of the text data in accordance with a start time code and an end time code, the subtitles can be displayed at a resolution equal to the resolution of the display apparatus. If the reproducing apparatus includes outline fonts for a set of letters used in one language system, subtitles can be appropriately displayed at the display apparatus.

The following describes an opposite case where subtitles are displayed at an SDTV display apparatus, based on a subtitle content compatible with HDTV. In this case:

$$\text{A horizontal ratio in resolution} = 720 \text{ pixels}/1920 \text{ pixels}$$

$$= 0.375$$

$$\text{A vertical ratio in resolution} = 480 \text{ pixels}/1080 \text{ pixels}$$

$$\approx 0.444$$

Based on the calculated horizontal and vertical ratios in resolution, outline fonts are shrunken to 37.5% horizontally, and to 44.4% vertically. By rendering the text data using the fonts shrunken in this manner and performing a display operation of the text data in accordance with a start time code and an end time code, the subtitles can be displayed at a resolution equal to the resolution of the display apparatus. Here, since outline fonts can be enlarged to be compatible with any number of pixels, the reproducing apparatus does not need to have fonts compatible with SDTV and fonts compatible with HDTV. As long as the reproducing apparatus includes outline fonts for a set of letters used in one language system, subtitles can be appropriately displayed at the display apparatus.

As mentioned above, when the resolution ratio between the movie content and the display apparatus 300 is not 1:1, a subtitle content obtained from the server apparatus 500 is utilized, in place of the presentation graphics streams multiplexed into the AVClip, according to the first embodiment. Thus, subtitles can be displayed at an appropriate resolution for the display apparatus 300, without enlarging/shrinking the presentation graphics streams multiplexed into the AVClip. Which is to say, it is not necessary to enlarge/shrink bitmap fonts. Therefore, even though subtitles multiplexed into the AVClip are bit-mapped, excellent display of subtitles can be achieved.

Moreover, such a use of substitutive subtitle data is made only when the resolution ratio is not 1:1 between the movie content and the display apparatus 300. Consequently, display of unnecessary subtitle data can be avoided, and a communication cost can be minimized for downloading subtitle data from the server apparatus 500.

(SECOND EMBODIMENT)

According to the first embodiment, the size of subtitles is adjusted by enlarging/shrinking outline fonts based on the resolution ratio. According to a second embodiment, on the other hand, subtitles are displayed using bitmap fonts. Requiring a smaller processing load in rendering characters than outline fonts, bitmap fonts are suitable to be used for displaying subtitles through a CPU having a limited capability. To display subtitles in bitmap fonts, a subtitle content includes an HTML document, in substitution for text data shown in Fig. 14. The control unit 29 interprets the HTML document and performs a display operation, to achieve display of subtitles. Furthermore, in the second embodiment, when the resolution ratio is not 1.0:1.0 between the display apparatus 300 and the subtitle content, the control unit 29 subjects the HTML document to a conversion operation, so that the resolution of the subtitle content matches the resolution of the display apparatus 300.

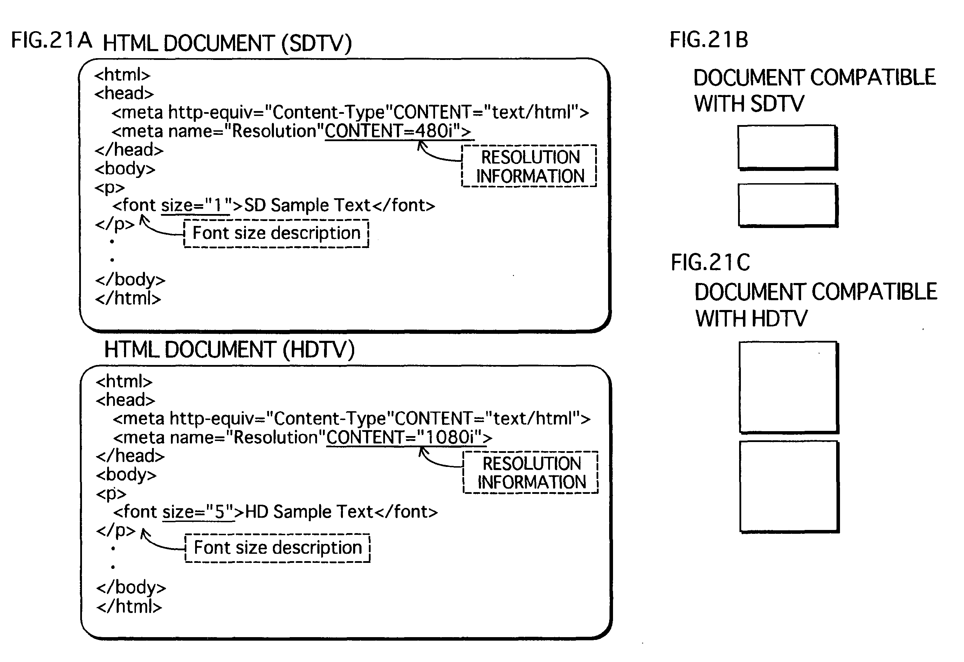

The following describes the conversion operation performed by the control unit 29 in the second embodiment, with reference to Fig. 21. In Fig. 21, the HTML document before the conversion operation is shown in the upper half, and an HTML document after the conversion operation is shown in the lower half.

In the HTML document before the conversion operation, <meta name = "Resolution" CONTENT = "480i"> is resolution information, and font size description <font size = 1> indicates a size of bitmap fonts used to display subtitles at an SDTV display apparatus. Here, a browser can display fonts of different points from one to seven, one of which is specified as the font size. In Fig. 21, as an example, fonts of the smallest point are selected for the HTML document.

Based on the description <meta name = "Resolution" CONTENT = "480i">, the control unit 29 knows that the HTML document is compatible with SDTV. When the control unit 29 knows, through the HDMI, that the display apparatus 300 to which the reproducing apparatus 200 is connected is compatible with HDTV, the control unit 29 converts the description <font size = 1> in the HTML document into description <font size = 5>, in accordance with the resolution ratio between the display apparatus 300 and the HTML document. This conversion operation enables the browser to display character strings at an enlarged size than original.

In addition, the control unit 29 changes the description < meta name = "Resolution" CONTENT = "480i"> into description <meta name = "Resolution" CONTENT = "1080i">

This enlarging method, however, has a disadvantage that a region for displaying a subtitle in two lines is changed. This is explained in detail in the following. Each pixel has a horizontally-long rectangular shape in an SDTV display apparatus, but a square shape in an HDTV display apparatus. If a subtitle in two lines compatible with SDTV is changed so as to be compatible with HDTV, a shape of a region for each of the characters constituting the subtitle is changed from rectangular (shown in Fig. 21B) to square (shown in Fig. 21C) . This means that each character is significantly enlarged vertically. As a result, a display region for the subtitle is expanded in an upward direction, and occupies an enlarged part on the screen. The enlarged display region for the subtitle may hide a region that is originally allocated for pictures.

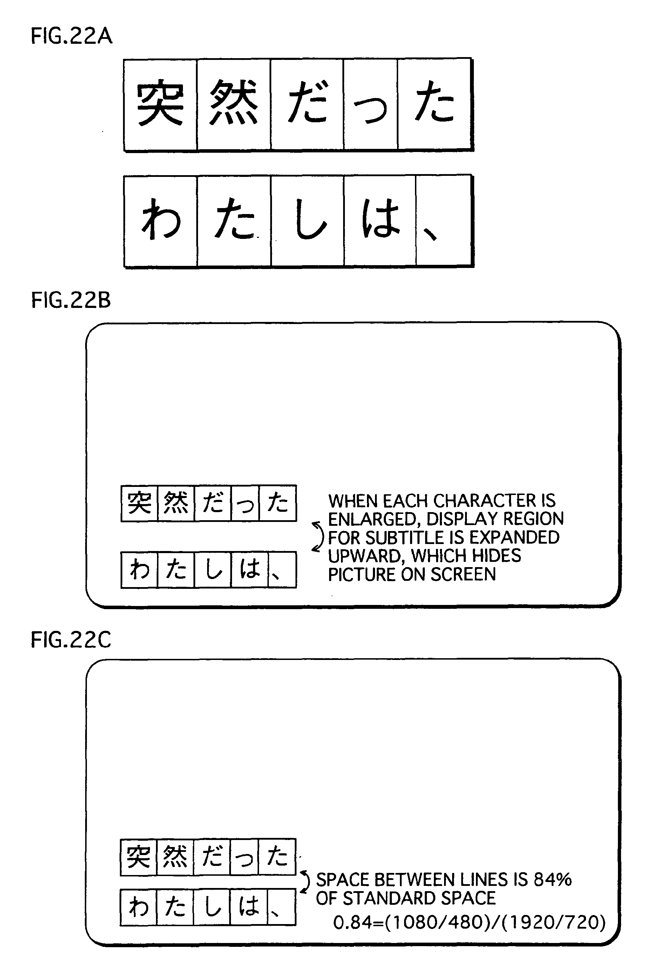

To solve this problem, the second embodiment adjusts a space between the lines of the subtitle, so that the display region for the subtitle stays the same irrespective of whether the subtitle compatible with SDTV is displayed at an SDTV or HDTV display apparatus. Figs. 22A to 22C are used to describe a procedure to adjust a space between lines. It is assumed that a subtitle is displayed in two lines as shown in Fig. 22A. If this subtitle is vertically enlarged 2.25-fold as shown in Fig. 20, or displayed using enlarged fonts as shown in Fig. 21, the space between the lines is exceedingly expanded, as shown in Fig. 22B. According to the second embodiment, a scale factor for the space between the lines is calculated based on the following formula. This scale factor is applied to a standard space for the enlarged fonts.

$$\text{The scale factor = vertical resolution ratio/horizontal resolution ratio}$$

Using the specific numerical values of HDTV and SDTV,

$$\text{The scale factor} = (1080/480)/(1920/720) = 0.84$$

Based on the calculated scale factor, the fonts are enlarged to 267%, and the space is reduced to 84%.
Suppose that an HTML document has the following description regarding character display, which indicates character strings at a font size of three are displayed in two lines.

```
<p><font size = "3">

character string

character string

</font></p>
```

The following shows the HTML document which has been converted so as to indicate that the character strings are enlarged based on the above-mentioned scale factors.

```
<p><font size = "3">

<span style = "font-size:267%;line-height:84%>

    character string

    character string

</span>

</font></p>
```

This conversion causes the characters to be enlarged 2.67-fold and the space between the lines to be reduced to 84%. As a consequence, the second embodiment reduces an upward expansion of a display region for a subtitle as shown in Fig. 22C, thereby maintaining a good view of pictures on the screen.

(THIRD EMBODIMENT)

A third embodiment relates to a page content composed of a document and a still image. Such a content is obtained by embedding a still image into a document written in a markup language, and can be often seen as Web pages. The BD-ROM 100 also uses a page content for a menu image. A still image in a page content is displayed at a smaller size than original as it has been shrunken to be embedded in a predetermined frame in a document.

When such a page content is reproduced, the resolution of the display apparatus 300 may be different from that of the content. In this case, the still image, which has been shrunken to be embedded in the document, needs to be enlarged.

This is explained using, as an example, an HTML document that is compatible with SDTV and has the following description.

```
<The HTML document>

<img src = "../picture/xxx.jpg">
```

To display this document at an HDTV display apparatus, the document needs to be enlarged based on the horizontal and vertical resolution ratios in the first embodiment. This is realized by converting the description of the HTML document as follows.

```
<The converted HTML document>

<img src = "../picture/xxx.jpg" height = 225% width = 267%>


*225% = 1080/480, 267% ≈ 1920/720
```

To embed the still image into the HTML document, the still image is shrunken by discarding some of the pixels. Therefore, the shrunken still image does not have all of the pixels of the original still image. If this shrunken still image is enlarged, the loss of the discarded pixels becomes obvious. Therefore, the beautiful original still image can not be restored.

This problem is described, in more detail, taking a still image in the JPEG File Interchange Format (JFIF) format as an example. The still image in the JFIF format is constituted by a plurality of functional segments including "application Type0 segment", "start of frame type0 segment", "Image_Width" and "Image_Height".

The following shows a data format of the still image in the JFIF format.

```
Start of image Segment (0xFF, 0xD8)

...

Start of frame type0 (0xFF, 0xCO)

Field Length

Sample

Image_Height

Image_Width

...

End of image Segment
```

The "Image_Width" and "Image_Height" respectively indicate horizontal and vertical resolutions. To be embedded into an HTML document compatible with SDTV, the still image is shrunken horizontally and vertically based on the following ratios.

```
The horizontal ratio = 720/Image_Width


The vertical ratio = 480/Image_Height
```

To display the HTML document into which the still image has been embedded on an HDTV display apparatus, the still image, which has been horizontally and vertically shrunken based on the above ratios, is enlarged based on the following ratios horizontally and vertically.

```
The horizontal ratio = 267% · Image_Width


The vertical ratio = 225% · Image_Height
```

Since the still image, which has been shrunken to be embedded, is enlarged with a loss of discarded pixels mentioned above, the beautiful original still image can not be restored.

To solve this problem, in the third embodiment, this page content in which the still image is embedded is not enlarged when reproduced. Instead, a resolution ratio between the HDTV display apparatus and the original still image is calculated, and the original still image is enlarged based on the calculated resolution ratio. Specifically speaking, horizontal and vertical enlargement ratios are calculated as follows.

$$\texttt{The horizontal ratio = 1920/Image\_Width}$$

$$\texttt{The vertical ratio = 1080/Image\_Height}$$

Thus, the original still image is enlarged so as to be compatible with the resolution of the HDTV display apparatus 300, by converting information of the Image_Width and Image_Height included in the original still image. This can completely prevent the above-mentioned problem regarding the discarded pixels. Therefore, a beautiful still image can be obtained as a result of the enlargement.

(OTHER MATTERS)

The above description does not include all of the embodiments of the present invention. The present invention can be realized by embodiments including the following modifications (A)-(F). The invention defined in each of the present claims includes the above-described embodiments, and broadened or generalized modifications of the embodiments. The range of the broadening and generalizing should be determined based on a state of the art in the related technical field at the time of the present application.

(A) According to the first and second embodiments, subtitle data is taken as an example of auxiliary data. However, the present invention is not limited to such. Auxiliary data may show a menu, a button, an icon, a banner or the like as long as it is reproduced together with pictures.

(B) Subtitles may be displayed based on subtitle graphics that is selected in accordance with a setting of the display apparatus 300. To be more specific, the BD-ROM 100 may therein store subtitle graphics compatible with a variety of display formats such as wide-screen, pan and scan, and letterbox formats. The reproducing apparatus 200 selects appropriate graphics and achieves display of the graphics, based on the setting of the display apparatus 300 to which the reproducing apparatus 200 is connected. In this case, the reproducing apparatus 200 subjects the displayed subtitles to display effects based on a PCS. This improves image quality of the subtitles. In this way, display effects achieved by characters that are normally expressed by pictures can be realized by subtitles displayed in accordance with the display setting of the display apparatus 300. This produces enormous practical advantages.

(C) According to the above description, subtitles are assumed to be character strings showing what actors say in movies. However, subtitles may include a combination of figures, characters, and colors that constitutes a trademark, national emblems, flags and badges, official marks and seals for authorization and verification used by nations, emblems, flags and badges of governmental or international organizations, and indication of origins of particular products.

(D) According to the first embodiment, subtitles are displayed horizontally at the top or bottom part of the screen. However, subtitles may be displayed at a right or left part of the screen. This allows subtitles in Japanese to be displayed vertically.

(E) According to the above embodiments, the AVClip constitutes a movie content. However, the AVClip may be data used to realize karaoke. If such is the case, a color of subtitles may be changed in accordance with progression of a song.

(F) According to the first and second embodiments, the reproducing apparatus 200 receives subtitle data from the server apparatus 500. However, the reproducing apparatus 200 may receive subtitle data from a source other than the server apparatus 500. As an alternative example, a user may purchase a recording medium in addition to the BD-ROM 100, and installs the recording medium on the HDD, so that the reproducing apparatus 200 receives subtitle data from the recording medium. Moreover, a semiconductor memory storing subtitle data may be connected to the reproducing apparatus 200, to provide subtitle data with the reproducing apparatus 200.

INDUSTRIAL APPLICABILITY

The present invention provides a recording medium and a reproducing apparatus which can achieve appropriate display of subtitles for a combination of a display apparatus and a content. This makes it possible to provide movie products having high added values, which stimulates the movie and commercial product markets. For this reason, the present invention provides a reproducing apparatus which is highly appreciated in the movie and commercial product industries.

**Claims**

1. A reproducing apparatus comprising:

   a detecting unit operable to detect a resolution of a frame picture in video data stored in a storage medium;
   a first display unit operable to cause a display apparatus to display auxiliary data that is stored in the storage medium, in synchronization with the video data, when a ratio is 1:1 between a resolution of the display apparatus and the resolution detected by the detecting unit; and
   a second display unit operable to, when the ratio is not 1:1, cause the display apparatus to display auxiliary data that is provided by a server apparatus in synchronization with the video data.

2. The reproducing apparatus of Claim 1, wherein
   the auxiliary data that is provided by the server apparatus is text data, and
   the second display unit renders the text data using a font to cause the display apparatus to display the auxiliary data.

3. The reproducing apparatus of Claim 2, wherein
   when rendering the text data, the second display unit:

   calculates horizontal and vertical ratios between the resolution of the display apparatus and a resolution of the auxiliary data that is provided by the server apparatus; and
   enlarges or shrinks the font horizontally and vertically in accordance with the calculated horizontal and vertical ratios.

4. The reproducing apparatus of Claim 3, wherein
   if the auxiliary data that is provided by the server apparatus shows a subtitle to be displayed in a plurality of lines, the second display unit adjusts a space between the lines in accordance with a predetermined ratio.

5. The reproducing apparatus of Claim 4, wherein
   the predetermined ratio is calculated by dividing a ratio between a vertical resolution of the display apparatus and a vertical resolution of the video data, by a ratio between a horizontal resolution of the display apparatus and a horizontal resolution of the video data.

6. A program that causes a computer to perform a reproducing operation comprising:

FIG.1

RESOLUTION
INFORMATION

HDMI

~300

DOWNLOAD REQUEST

500

MOVIE CONTENT

| AV Clip |
| CLIP INFORMATION (RESOLUTION INFORMATION) |

RESOLUTION
INFORMATION

~200

100

400

SUBTITLE CONTENT

| BITMAP |
| TEXT |

EP 1 628 477 A1

FIG.2

ROOT

BDMV

APPLICATION FORMAT

AV Clip

XXX. M2 TS

(VIDEOS AND BITMAP SUBTITLES)

CLIP INFORMATION

XXX. CLPI

(SHOWING RESOLUTION FOR VIDEOS)

FIRST ROW:
APPLICATION
LAYER

SECOND ROW:
FILE SYSTEM
LAYER

FILE SYSTEM

THIRD ROW:
PHYSICAL
LAYER

| LEAD -IN AREA | VOLUME AREA | LEAD-OUT AREA |

BD-ROM

FOURTH ROW

100

# FIG.3

EP 1 628 477 A1

pj1 pj2 pj3

VIDEO FRAME STRING

AUDIO FRAME STRING

FIRST ROW:
FRAME STRING

SECOND ROW:
PES PACKET

THIRD ROW:
TS PACKET

FOURTH ROW:AV Clip
(XXX. M2TS)

FIFTH ROW: TS PACKET

SIXTH ROW: PES PACKET

SEVENTH ROW:
GRAPHICS STREAM

| PCS | PDS | ODS | ODS | ODS | ODS | | | | |

PRESENTATION GRAPHICS STREAM

| ICS | PDS | ODS | ODS | ODS | ODS | | | | |

INTERACTIVE GRAPHICS STREAM

## FIG.4A

transport packers with the same PID

**FIRST ROW**

**SECOND ROW**

| PES Packet | PES Packet | PES Packet | PES Packet | PES Packet | PES Packet | PES Packet | PES Packet | PES Packet |
|---|---|---|---|---|---|---|---|---|

**THIRD ROW**

| PCS | WDS | PDS | ODS | ODS | ODS | ODS | ODS | END |
|---|---|---|---|---|---|---|---|---|

Control Segment

Definition Segment

## FIG.4B

PES Packet

| PTS DTS | PCS |
|---|---|

PACKET HEADER · PAYLOAD

PES Packet

| PTS DTS | WDS, PDS, ODS |
|---|---|

PACKET HEADER · PAYLOAD

EP 1 628 477 A1

# FIG.5

FIRST ROW | EPOCH | EPOCH | EPOCH | EPOCH | EPOCH

hk1

SECOND ROW | Epoch Start Display Set | Acquisition Point Display Set 1 | Normal Case Display Set n

hk2

THIRD ROW | PCS | WDS | PDS | ODS | ODS | ODS | ODS | ODS | END

Composition Segment

Definition Segment

EP 1 628 477 A1

FIG.6

window2

window1

TIME PERIOD (Epoch 1), ON TIME AXIS OF REPRODUCTION, DURING WHICH SUBTITLE APPEARS IN PREDETERMINED AREA (WINDOW 1)

TIME PERIOD (Epoch 2), ON TIME AXIS OF REPRODUCTION, DURING WHICH SUBTITLE APPEARS IN PREDETERMINED AREA (WINDOW 2)

EP 1 628 477 A1

## FIG.7A

object_definition_segment

| |
|---|
| segment_type |
| segment_length |
| object_id |
| object_version_number |
| last in sequence flag |
| object_data_fragment |

RUN-LENGTH
COMPRESSED
BITMAP
GRAPHICS

## FIG.7B

palette_definition_segment

| |
|---|
| segment_type |
| segment_length |
| palette id |
| palette version_number |
| |
| palette_entry |

| |
|---|
| Y_value |
| Cr_value |
| Cb_value |
| T_value |

## FIG.8A

window_definition_segment

| window_id |
| --- |
| window_horizontal_position |
| window_vertical_position |
| window_width |
| window_height |

## FIG.8B

presentation_composition_segment

| segment_type |
| --- |
| segment_length |
| composition_number |
| composition_state |
| |
| palette_update_flag |
| |
| palette_id |
| composition_object(1) |
| composition_object(2) |
| ⋮ |
| composition_object(i) |
| ⋮ |
| composition_object(m) |

wd1

| object_id |
| --- |
| window_id |
| object_cropped_flag |
| |
| object_horizontal_position |
| object_vertical_position |
| cropping_rectangle information(1) |
| cropping_rectangle information(2) |
| ⋮ |
| cropping_rectangle information(i) |
| ⋮ |
| cropping_rectangle information(n) |

wd2

| object_cropping_horizontal_position |
| --- |
| object_cropping_vertical_position |
| object_cropping_width |
| object_cropping_height |

EP 1 628 477 A1

FIG.9

EP 1 628 477 A1

## FIG.10

EXAMPLE
DESCRIPTION
OF PCS AND
WDS IN DS 1

Video Plane

FRAME PICTURE

COMBINED IMAGE

(window_horizontal_position,
window_vertical_position)

Graphics
Plane

LP1

(object_horizontal_position,
object_vertical_position)

cp1

ACTUALLY,

ACTUALLY,

(object_cropping_horizontal_position,
object_cropping_vertical_position)

window_height

window_width

object_cropping_height

ST1

object_cropping_width

ACTUALLY, I LIED.

Object Buffer

## FIG.11

EXAMPLE
DESCRIPTION
OF PCS IN DS 2

Video Plane

FRAME PICTURE

COMBINED IMAGE

$\begin{pmatrix} window\_horizontal\_position, \\ window\_vertical\_position \end{pmatrix}$

Graphics Plane

$\begin{pmatrix} object\_horizontal\_position, \\ object\_vertical\_position \end{pmatrix}$

$\begin{pmatrix} object\_cropping\_horizontal\_position, \\ object\_cropping\_vertical\_position \end{pmatrix}$

I LIED.

I LIED.

window_width

window_height

object_cropping_height

I LIED. I

object_cropping_width

Object Buffer

## FIG.12

EXAMPLE DESCRIPTION OF PCS IN DS 3

Video Plane

FRAME PICTURE

COMBINED IMAGE

(window_horizontal_position, window_vertical_position)

Graphics Plane

(object_horizontal_position, object_vertical_position)

(object_cropping_horizontal_position, object_cropping_vertical_position)

window_width

window_height

object_cropping_height

object_cropping_width

Object Buffer

## FIG.13

## FIG.14

TEXT SUBTITLE CONTENT

| CHAPTER | START TIME CODE | END TIME CODE | DISPLAY COLOR | TEXT DATA | SIZE | DISPLAY POSITION |
|---|---|---|---|---|---|---|
| 1 | 00:00:00:10 | 00:00:00:15 | WHITE | TEXT DATA 1 | 18 POINTS | |
| 2 | 00:20:40:00 | 00:20:50:00 | YELLOW | TEXT DATA 2 | 14 POINTS | |
| 3 | 00:01:05:00 | 00:01:06:00 | WHITE | TEXT DATA 3 | 14 POINTS | |
| 4 | | | | | | |
| | | | | | | |

EP 1 628 477 A1

SUBTITLE CONTENT FROM SERVER APPARATUS   FIG.15

HDMI

VIDEO OUTPUT

AUDIO OUTPUT

Enhanced Interactive Graphics Plane
960×540×32-bit(RGB α)
1920×1080×8-bit index+CLUT

Presentation Graphics
1920×1080×8-bit index+CLUT

Video plane
1920×1080×16-bit YUV

Background Still plane
1920×1080×16-bit YUV

Display layout control
Dynamic graphics drawing
Text and Font
Still Iimage

CLUT UNIT
CLUT UNIT

Font Generator
I-Graph. Decoder
P-Graph. Decoder
Video Decoder
Audio Decoder

CONTROL UNIT
STATIC SCENARIO MEMORY

De-mux
Read Buffer

COMMUNI-CATION UNIT
HDD

FIG.16

EP 1 628 477 A1

FIG.17

OPERATION PERFORMED BY GRAPHICS CONTROLLER

S1
CURRENT
TIME ON TIME AXIS OF REPRODUCTION — YES
MATCHES TIME SHOWN BY DTS
OF PCS?

NO

S5
YES
composition_state
=Epoch_Start ?
NO

S6
ENTIRELY CLEAR
GRAPHICS PLANE

S7
CLEAR WINDOW INDICATED BY window_
horizontal_position, window_vertical_position,
window_width, and window height OF WDS

S8
NO
CURRENT
TIME HAS EXCEEDED TIME SHOWN BY PTS
OF ODSx?

YES

S9
NO
object_crop_flag=0 ?
YES

S11
GRAPHICS OBJECT x THAT HAS BEEN CROPPED BASED ON object_cropping_horizontal_
position, object_cropping_vertical_position, cropping_width, and cropping_height IS
WRITTEN INTO POSITION INDICATED BY object_cropping_horizontal_position and object_
cropping_vertical_position IN WINDOW ON GRAPHICS PLANE

S10
NOT DISPLAY
GRAPHICS OBJECT

S12
CURRENT TIME
HAS EXCEEDED TIME SHOWN BY PTS OF ANOTHER
ODSy?
YES
S13
x→y

NO

EP 1 628 477 A1

FIG.18

```
┌─────────────────────────┐
│ PROCEDURE OF REPRODUCING │
│      MOVIE CONTENT       │
└─────────────────────────┘
```

**S21**
REFER TO RESOLUTION INFORMATION
INCLUDED IN CLIP INFORMATION

**S22**
RETRIEVE RESOLUTION OF DISPLAY APPARATUS TO
WHICH REPRODUCING APPARATUS IS CONNECTED,
THROUGH HDMI

**S23**
CALCULATE RESOLUTION RATIO BETWEEN
MOVIE CONTENT AND DISPLAY APPARATUS

**S24**
PUT VIDEO STREAM MULTIPLEXED INTO AVCLIP
INTO VIDEO DECODER 4 SO THAT REPRODUCTION
OF VIDEOS IS STARTED

**S25**
RESOLUTION RATIO = 1? — YES

NO

**S27**
HD STORES SUBTITLE CONTENT? — YES

NO

**S26**
SWITCHES 22 AND 25 ARE
SWITCED OVER SO THAT
GRAPHICS STREAM MULTIPLEXED
INTO AVCLIP IS PUT INTO P-
GRAPHICS DECODER 9

(A)

**S28**
DOWNLOAD SUBTITLE CONTENT
FROM SERVER APPARATUS TO HD

**S29**
TEXT OR BITMAP SUBTITLE CONTENT? — TEXT

BITMAP

**S30**
SWITCHES 22 AND 25 ARE SWITCHED
OVER SO THAT SUBTITLE CONTENT
STORED ON HD IS PUT INTO P-GRAPHICS
DECODER 9

**S31**
DISPLAY OPERATION OF
SUBTITLE BASED ON
TEXT SUBTITLE CONTENT

(A)

END

## FIG.19

DISPLAY OPERATION OF SUBTITLE
BASED ON TEXT SUBTITLE CONTENT

(A)

S33
CURRENT
TIME ON TIME AXIS
OF REPRODUCTION MATCHES
ANY ONE OF START TIME CODES IN
SUBTITLE CONTENT
(START TIME CODE i)?

YES

S36
RENDER CHARACTER IN TEXT
DATA CORRESPONDING TO START
TIME CODE i USING OUTLINE FONT,
TO DISPLAY SUBTITLE

(A)

NO

S34
CURRENT
TIME MATCHES END TIME CODE
CORRESPONDING TO START
TIME CODE i?

YES

S37
ERASE DISPLAYED
CHARACTER

(A)

NO

S35
REPRODUCTION
OF MOVIE CONTENT
ENDS?

NO

YES

END

FIG.20A

720×480

あなたが

SHAPE OF PIXEL IN HDTV

SHAPE OF PIXEL IN SDTV

1920×1080

FIG.20B

IF SUBTITLE COMPATIBLE WITH RESOLUTION OF 720 × 480 IS MERELY DISPLAYED AT RESOLUTION OF 1920 × 1080,

⇩

CHARACTERS ARE DISPLAYED VERTICALLY LONG BECAUSE OF DIFFERENCE IN SHAPE OF EACH PIXEL

FIG.20C

ENLARGE CHARACTERS BASED ON HORIZONTAL AND VERTICAL RESOLUTION RATIOS

2.25-FOLD

2.67-FOLD

2.67=HORIZONTAL RESOLUTION RATIO = 1920 PIXELS/720 PIXELS

2.25=VERTICAL RESOLUTION RATIO = 1080 PIXELS/480 PIXELS

## FIG.21A  HTML DOCUMENT (SDTV)

```
<html>
<head>
    <meta http-equiv="Content-Type"CONTENT="text/html">
    <meta name="Resolution"CONTENT=480i">
</head>                                              ┌─────────────────┐
<body>                                               ┊ RESOLUTION      ┊
<p>                                                  ┊ INFORMATION     ┊
    <font size="1">SD Sample Text</font>             └─────────────────┘
</p>      ┌──────────────────────┐
    .     ┊ Font size description ┊
    .     └──────────────────────┘
    .

</body>
</html>
```

## HTML DOCUMENT (HDTV)

```
<html>
<head>
    <meta http-equiv="Content-Type"CONTENT="text/html">
    <meta name="Resolution"CONTENT="1080i">
</head>                                              ┌─────────────────┐
<body>                                               ┊ RESOLUTION      ┊
<p>                                                  ┊ INFORMATION     ┊
    <font size="5">HD Sample Text</font>             └─────────────────┘
</p>      ┌──────────────────────┐
    .     ┊ Font size description ┊
    .     └──────────────────────┘
    .

</body>
</html>
```

## FIG.21B

### DOCUMENT COMPATIBLE WITH SDTV

## FIG.21C

### DOCUMENT COMPATIBLE WITH HDTV

FIG.22A

| 突 | 然 | だ | っ | た |
|---|---|---|---|---|

| わ | た | し | は | 、 |
|---|---|---|---|---|

FIG.22B

| 突 | 然 | だ | っ | た |
|---|---|---|---|---|

| わ | た | し | は | 、 |
|---|---|---|---|---|

WHEN EACH CHARACTER IS ENLARGED, DISPLAY REGION FOR SUBTITLE IS EXPANDED UPWARD, WHICH HIDES PICTURE ON SCREEN

FIG.22C

| 突 | 然 | だ | っ | た |
|---|---|---|---|---|

| わ | た | し | は | 、 |
|---|---|---|---|---|

SPACE BETWEEN LINES IS 84% OF STANDARD SPACE

$$0.84=(1080/480)/(1920/720)$$

## INTERNATIONAL SEARCH REPORT

| | International application No. |
|---|---|
| | PCT/JP2004/005778 |

**A. CLASSIFICATION OF SUBJECT MATTER**
Int.Cl$^7$ H04N5/93, G11B27/34

According to International Patent Classification (IPC) or to both national classification and IPC

**B. FIELDS SEARCHED**

Minimum documentation searched (classification system followed by classification symbols)
Int.Cl$^7$ H04N5/93, G11B27/34

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2002-247526 A (Toshiba Corp.), 30 August, 2002 (30.08.02), Full text; Figs. 1 to 6 (Family: none) | 1-6 |
| A | JP 2002-27429 A (Deutsche Thomson Brandt GmbH.), 25 January, 2002 (25.01.02), Full text; Figs. 1 to 2 & US 2001/44726 A1 & EP 1158799 A1 | 1-6 |
| A | JP 2002-152691 A (Pioneer Electronic Corp.), 24 May, 2002 (24.05.02), Full text; Figs. 1 to 5 & US 2002/57897 A1 & EP 1211891 A2 | 1-6 |

| ☒ Further documents are listed in the continuation of Box C. | ☐ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 09 August, 2004 (09.08.04) | Date of mailing of the international search report 24 August, 2004 (24.08.04) |
|---|---|
| Name and mailing address of the ISA/ Japanese Patent Office | Authorized officer |
| Facsimile No. | Telephone No. |

Form PCT/ISA/210 (second sheet) (January 2004)

40

| International application No. |
|---|
| PCT/JP2004/005778 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-16884 A (Matsushita Electric Industrial Co., Ltd.), 18 January, 2002 (18.01.02), Full text; Figs. 1 to 21 & EP 1168834 A2 & US 2002/9295 A1 | 1-6 |
| A | JP 2001-45436 A (NEC Corp.), 16 February, 2001 (16.02.01), Par. No. [0020]; Fig. 2 (Family: none) | 1-6 |

Form PCT/ISA/210 (continuation of second sheet) (January 2004)